# EUROPEAN PATENT APPLICATION

(11) **EP 4 502 114 A2**
(43) Date of publication of application: **05.02.2025**
(21) Application number: 24218145.1
(22) Date of filing: 27.03.2024
(51) Int. Cl.: C10K 1/10

(54) **METHOD AND PLANT FOR PRODUCTION OF A FUEL GAS AND METHANOL FROM WASTE**

(30) Priority: 30.03.2023 NO 20230361
(62) Divisional of application: 24716288.6
(71) Applicant: Jacobsen, Jørn, London, W1B 3HH (GB)
(72) Inventor: Jacobsen, Jørn, London, W1B 3HH (GB)
(74) Representative: Bryn Aarflot AS

(57) **Abstract**

A sorting system for separating autoclaved waste into multiple fractions with different calorific values for a stable calorific value input to a thermolysis and pyrolysis reactor. The system includes conveyors for transporting waste to sorting devices and sorting devices for separating waste into recyclable and non-recyclable materials. It separates ferrous metals using a magnetic separator into an iron fraction. Waste is further separated by size and density into a large high calorific value fraction, a flock/fibre fraction, a light materials fraction, a ferrous fraction, and a non-ferrous fraction. Nylon and PVC are separated from plastic using wind sifting and near infrared detection into PVC and nylon fractions. The system effectively separates recyclable materials, including iron, ferrous, non-ferrous, PVC, and nylon fractions, from non-recyclable waste.

## Description

### Technical Field

The present invention relates to methods and devices for handling of waste, for example waste mainly of organic origin such as biomass, municipal solid waste (MSW), plastic, rubber and the like. More specifically, the present invention relates to improvements in the conversion of said waste into a useful energy source, such as electrical power for fuel cells, fuel for district heating, or carbonaceous solids like char and biochar as a product, and to separation and sorting of solid particles from the residues after the handling of waste. Alternatively, the present invention relates to improvements in the liberation of particles, products and/or other components from waste or alternative source material of organic origin or inorganic origin. More specifically, the present invention relates to the extraction of protein from vegetable matter or the extraction of glass fiber from wind turbine blades.

### BACKGROUND ART

Domestic waste is a mixture of materials, and comprises all from food, both covering food of animal and plant origin, paper and other products made of plant fibers, such as fabric, building material, both comprising wood and wood-based products, plastic and concrete, natural and synthetic polymer materials, such as plastics of different kinds, rubber, synthetic rubber, metals, etc. Industry waste is also a mixture of materials, comprising a range of materials from mining waste products to used wind turbine blades.

Traditionally, domestic waste and industry waste have been filled into landfills. Landfills take up valuable space and create an aesthetical problem both with regard to the "visual pollution", and the smell associated with the waste. An additional problem with landfills is poisonous and environmentally unacceptable compounds in gaseous form, or liquids or solids that are solubilized in liquids in the landfill. Gases released from the waste in a landfill may, in addition to result in unwanted smell, comprise poisonous and/or environmentally unacceptable gaseous compounds, such as Volatile Organic Compounds (or VOC) that will be released from the waste into the atmosphere. Liquids, either being a part of the waste, or water caused by rain, draining through the landfill, will solubilize solid compounds in the landfill, and will leak from the landfill, to pollute both surface water in streams, lakes, and may penetrate into the ground water.

To avoid filling up all available space with landfills and to avoid the other problems associated therewith, plants for sorting of the waste have been built. Recyclable materials are separated from non-recyclable waste. The recyclable material is sent to plants to recover valuable materials, and recycle the materials, such metals. The non-recyclable materials may be separated into combustible materials and non-combustible materials. The non-combustible materials are sent to landfills or the like, whereas combustible materials are introduced into an incineration plant. In the incineration plant the combustible material is combusted at high temperature to destroy all temperature degradable or combustible material, including poisonous and environmentally unwanted compounds. Additionally, different means are included to avoid emission of hazardous gases from the incineration plant.

By the combustion the volume of the solid waste is reduced by from 50 to 90% dependent on the composition of the waste, and the combustion technology. The heat of combustion is often used for district heating and/or cooling.

Technology for sorting waste is well known. Normally, the waste is sorted based on their physical properties, such as magnetic properties, density, surface to weight, etc.

Incineration plants are also well known, and a large number of such plants are in operation.

EP1160307 (KUNSTSTOFF- UND UMWELTSTECHNIK GMBH, 05.12.2001) relates to a method and plant for thermal treatment and chemical conversion of natural and synthetic compounds from waste to form a gas for further use. The composition of the product gas is not well defined, but the product gas seems to comprise a mixture of lower hydrocarbons, CO2, CO, and hydrogen. Lower hydrocarbons are in the present description used mainly to encompass hydrocarbons that are gases at ambient temperatures, such as methane, ethane, propane, and butane. It is indicated that the product gas is used a gas operated engine or turbine. It is; however, clear that the gas composition from the device according to EP1 160307 will vary as a function of the actual composition of the waste introduced into the device. Such variations make the gas unsuitable for a modern high-efficient gas turbine but are acceptable for gas operated engines that are far less efficient than a modern gas turbine. No other potential uses are indicated for the product gas.

The present invention uses the core technology described in EP1160307 for pyrolysis and thermolysis of organic compounds. The present invention is directed to improvements allowing to obtain a product gas having a predetermined composition, mainly comprising hydrogen, CO, CO2 and lower hydrocarbons adjusted to fit the intended use and having a WOBBE-index (WOBBE-index = calorific value / (gas specific gravity)^{-1/2}), that is substantially constant over time.

Especially when the intended use for the produced gas is as fuel for a gas turbine, it is important to ascertain a constant WOBBE-index fulfilling the requirements of a modern efficient gas turbine, i.e., that the fluctuations in the WOBBE-index is less than 2% over a period of 10 minutes. The composition of the produced gas having high hydrogen content, high purity hydrogen content respectively, resulting in a high temperature flame, makes it especially important to keep the WOBBE-index substantially constant.

In areas as diverse as mining, recycling, or food production it is commonly necessary to process materials consisting of multiple intermingled components by mechanically liberate, micronize, and separate such components from each other. In the case of food processing, it can be necessary to separate fibers from protein and in recycling it can be advantageous to sort recyclable materials that need to be handled separately, e.g., glass fragments (so called fine cullet) of different colors as well as liberate and sort metals from other minerals in bottom ash. In the case of mining, it may be the case that post-process waste materials, such as slag or tailings, still contain a sizeable fraction of potentially useful minerals that could represent a valuable resource if they can be reliably sorted. However, separating these minerals from the greater mass of e.g., silica oxides is difficult as it first requires liberating the component metals and minerals from each other and subsequently sorting the resulting particles according to mineral content as expressed in their differences in relative weight.

Combustion residues, like char and ash, are valuable materials, containing, as mentioned above, multiple intermingled components. The residues need further processing.

Thus, there is a need for better material separation methods, particularly methods for separating and sorting very small particles by use of mechanic methods as compared to chemical extractions.

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

One application of the methods and devices disclosed here is associated with the treatment of char products from processes, although many other applications are also possible. Such waste products can take the form of e.g., char, slag, dross, or tailings and may still contain a sizeable fraction of useful and valuable minerals that were not extracted in previous processes. Methods for extracting these useful minerals may involve comminuting the waste material into smaller solid particles and mixing them with liquid to form a slurry, and then processing said particles with the purpose of separating them and sorting them by mineral content based in their specific density.

Herein, a particle or solid particle is taken to be a small piece of solid material. Small, in this case, is somewhat dependent on the specific context and application, but may be understood as the piece of material being less than a centimeter across, and preferably less than a millimeter across and even smaller than just a micron in size.

Separating and sorting a mix of solid particles of different elements can be done either dry or wet. The challenge is commonly increased as the particles become smaller in size. Micronized particles below 100 microns in size can be specially demanding due to their liking to become electrically charged for instance in a dry sorting resulting in conglomerated larger structures of smaller particles often of different kind. These conglomerates would obviously not have a unique element-based density. Of these and other reasons a slurry tend to keep individual particles suspended in the liquid fluid. A typical wet mix could consist of a slurry containing solid particles comprising different groups of minerals and other materials suspended in water. Such slurries consist commonly of a significant volume of liquid allowing the slurry to be pumped. One way of sorting said solid particles is by density. In particular, if the particles are of similar size, the difference in density or specific weight between, for example, a particle of sand and a particle of an iron compound will result in the two particles having different weights for the same size, with the iron compound particle being heavier than the silica particle in this example. Successful sorting the particles by weight will then make it possible to separate the iron oxide from the sand.

In cyclonic separation the particles are commonly suspended in a fluid, which can be either a liquid or a gas, in a chamber that is typically round conical or cylindrical. The fluid containing the particles flows through the chamber in a spiral pattern, causing heavier particles to be pushed towards a wall of the chamber. Depending on the type of cyclonic separator, the particles may strike the chamber wall and then fall to the bottom of the chamber due to gravity or be caught in a secondary fluid stream and carried to one end of the chamber, where they can be extracted. In some cyclonic separators, the fluid is induced to flow in one direction (e.g., in the direction of gravitational power) in a spiral pattern, then turn at an end of the cyclone and flow in the opposite direction closer to the center of the chamber. In this case, heavier particles will tend to fall out of the main flow of the fluid at the turning point and accumulate near the turning point. As lighter particles are pushed out towards the chamber walls to a lower degree and thereby may follow the fluid up through the chamber center, a cyclonic particle separator can be used to separate particles by weight, as well as to simply remove particles of all kinds from the fluid.

### SUMMARY OF THE INVENTION

According to a first aspect, the present invention relates to a method. In a first part, to a method for thermal treatment and chemical transformation of waste comprising natural and synthetic carbonaceous materials for generation of a fuel gas for further use, the method, according to the first part, comprising the following steps:
a. adjusting the composition of the feedstock, both in humidity and concentration of natural or synthetic carbonaceous materials, to adjust the calorific value of the feed to thermolysis and pyrolysis reactors, e.g., to a predetermined level by drying or introduction of water or steam into the carbonaceous material,
b. introduction of the carbonaceous material into thermolysis and pyrolysis reactor(s), in which the materials are thermally treated in the absence of oxygen to produce a raw pyrolysis and thermolysis gas and a carbonaceous solid rest,
c. introduction of the carbonaceous solid rest from step b) and steam into a conversion unit to cause partial steam reforming of light hydrocarbons and partial gasification of solid carbonaceous material therein to produce a synthesis gas comprising hydrogen, CO and CO2 that is withdrawn and introduced into a second scrubbing section and a solid rest that is withdrawn for further treatment or disposal,
d. introducing the raw thermolysis and pyrolysis gas from step b) into a first gas cleaning unit where the gas is separated into a first light oil fraction, having a boiling range from 170 to 350 °C at atmospheric pressure, and a scrubbed raw gas fraction mainly comprising H, CO, CO2, and hydrocarbons having a boiling range below 170 °C,
e. introducing the scrubbed raw gas fraction into a first gas separation unit where the raw gas is separated into a hydrogen enriched gas fraction and a low hydrogen fraction,
f. introduction of the low hydrogen fraction into the conversion unit to be converted together with the solids therein,
g. introducing the hydrogen enriched fraction into the second separation unit, wherein the hydrogen enriched fraction and the synthesis gas of step c) are separated in a second light oils fraction, having a boiling range of 100 to 200 °C at atmospheric pressure, and a synthesis gas fraction that is withdrawn through a synthesis gas line,
h. recycling of the first light oils fraction from step d) into the thermolysis and pyrolysis reactor(s).

The post-treatment of the pyrolysis gas produced in the reactor, and the conversion in the conversion unit, are necessary to obtain a sufficient amount of fuel gas having a sufficiently high WOBBE-index to be useful for intended purposes, such as to be used as a fuel gas for a gas turbine.

According to one embodiment, the second light oils fraction from step g) is recycled to the thermolysis and pyrolysis reactor(s) together with the first light oils fraction. The second light oil fraction is preferably recycled to reduce or eliminate the presence of such light oils in the produced fuel gas, by exposing the light oils for an additional cycle of thermolysis and pyrolysis.

The first and second light oil fractions are, according to one embodiment, introduced into a cracking unit in which a part of the light oils are cracked, and where the gas resulting from the cracking is separated into a third light oils fraction which is introduced into the thermolysis and pyrolysis reactor(s), and a cracked gas fraction, mainly comprising H, CO and CO2, that is withdrawn through a cracked gas line and introduced into the first cleaning unit. Introducing the first and second light oils fractions into a cracking unit before recycling of light oils remaining after cracking, is efficient in breaking down the light oils to improve the efficiency of the removal of the light oils by adding an additional step for light oils removal or reduction.

The fuel gas stream in the synthesis gas line is, according to one embodiment, introduced into a CO2 capture unit to separate at least parts of the CO2 from the produced fuel gas. By separating at least, a part of the CO2 from the fuel gas, the calorific value, or WOBBE-index, of the produced fuel gas is increased. Additionally, capturing of CO2 results in a reduction of the CO2 emission from the plant, and capture of CO2 that can be deposited safely or used, e.g., in methanol production, as pressure support in oil and gas fields. The rate of CO2 capture may also be adjusted to allow for adjustment of the WOBBE-index to avoid unwanted fluctuation in the WOBBE-index.

The conversion in the conversion unit may be controlled to stabilize the WOBBE index of the produced fuel gas steam. The conversion may be adjusted by temperature, pressure, catalyst, and steam. By adjusting the temperature in the conversion unit, by adjusting the amount of steam introduced into the conversion unit, and by the amount of gas introduced into the conversion unit from the first separation unit.

The method, respectively the first part of the method, as described above, wherein the incoming waste is fractioned into fractions having different calorific value, and wherein the fractions are remixed in ratios giving a waste input into the thermolysis and pyrolysis reactor that has a substantially stable calorific value. Adjustment of the incoming waste to be treated is an additional way of adjusting the WOBBE-index of the resulting gas.

According to one embodiment, the incoming waste is autoclaved before being fractioned. During the process of autoclaving, the waste undergoes different processes that removes the odor from the waste, that reduces the volume of the waste and that makes the sorting process easier, as the different components in the waste gets more separated from each other.

According to the first aspect, the present invention relates to a method. In a second part, to a method for sorting small particles from other small particles based on each particle's density.

According to a preferred embodiment method is for processing a fluid comprising solid particles and using a cyclonic particle separator. The cyclonic particle separator is comprising a rotor, at least one electromagnetic coil and/or at least one ultra-sound generator, and a main chamber. The main chamber is comprising at least one section of non-conducting material and the method is comprising the steps of:
feeding the fluid into the cyclonic particle separator,
inducing a rotation of the fluid in the cyclonic particle separator chamber by the rotor,
and generating, by the electromagnetic coil, a pulsed magnetic field and/or by the ultra-sound generator, a pulse in the particle separator in connection to the at least one section of non-conducting material, where the pulsed magnetic field and/or the ultrasound being arranged to vibrate the solid particles, and thereby liberating the solid particles from each other.

In an embodiment the rotor comprises a plurality of holes arranged to admit solid particles into an interior cavity.

In a further embodiment, the method comprises separating the slurry fluid into at least a first and a second output stream, where the first output stream being extracted at a first outlet and the second output stream being extracted at a second outlet, where the first and second outlet being arranged in different positions on the cyclonic particle separator, and wherein the solid particles in the first and the second output stream have different relative weight based on size and density.

In a further embodiment, the method comprises separating the fluid into three output streams extracted at a first, second and third outlet, where the first, second and third outlets being arranged in different positions on the particle separator, wherein the solid particles in each output stream have different weights, based on density and size, when compared with other output streams.

In a further embodiment, the method is comprising further sorting of the solid particles of at least one outlet stream by means of methods such as magnetic separation, gravity separation, filtering, or electrostatic separation, or by feeding the at least one outlet stream into a second cyclonic particle separator.

In a further embodiment, the method comprises, prior to feeding the fluid into the cyclonic particle separator, generating the solid particles comprised in the fluid by comminuting a source material in a comminutor.

In a further embodiment, the method is comprising sorting the solid particles according to a size of the solid particles and selecting solid particles in a predetermined size range for processing in the cyclonic particle separator.

In a further embodiment of the method, the comminutor comprises a spinnable shaft and two or more processing chambers, separated by segmented plates, wherein each processing chamber comprises a rotor disc attached to the shaft and one or more vortex generators placed in a side wall apex corner of the processing chambers, wherein the source material is fed into the comminution reactor and particles are liberated from the source material by means of a chaotic vortex flow of the source material and the liberated particles generated in the processing chambers.

In a further embodiment of the method the fluid comprises a liquid, where the solid particles are suspended in the liquid and thereby forming a slurry.

In a further embodiment, the method comprises, prior to feeding the slurry into the cyclonic particle separator, mixing the solid particles with liquid to form the slurry.

In a further embodiment of the method the solid particles comprise material from a process in which minerals are extracted from an ore.

According to a second aspect, the present invention relates to a plant for carrying out the method. In a first part, to a plant for carrying out the above described first part of the method. The plant, according to the first part, comprising a waste inlet, thermolysis and pyrolysis reactor(s) for thermal treatment of the waste to produce a pyrolysis gas and a solid rest, a conversion unit, in which gasification of solid rest, steam reforming of methane and water gas shift reaction of CO take place in order to obtain the maximum yield of hydrogen, depending on what is required, for gasification of at least a part of the solid rest from the reactor(s), a first gas cleaning unit for separation of the gas produced in the thermolysis and pyrolysis reactor(s) into a first light oils fraction a light oils recycle line for recycling of the light oils from the first gas cleaning and a scrubbed raw gas line for introduction of the raw gas from the first gas cleaning unit into a gas separation unit, a gas line for introduction of a low hydrogen fraction for the separation unit into the conversion unit, and a hydrogen rich gas line for introduction of a hydrogen rich fraction into a second gas separation unit, a converted gas line for withdrawal of gasified solids from the conversion unit into the second gas separation unit, and a fuel gas line for withdrawal of the produced fuel gas.

According to one embodiment, the plant further comprises a second light oils recycle line for recycling of a second light oils fraction from the second gas separation unit to the reactor(s).

According to one embodiment, the plant further comprises a cracking unit for cracking and separation of the first and second light oil fractions into a third light oil fraction, and a cracked gas fraction, wherein a light oils recycle line is arranged to withdraw the light oils from the cracking unit and introducing the light oils into the reactor(s), and a cracked gas line is provided for withdrawal of the cracked gas from the cracking unit and introduction of the gas into the first gas cleaning unit.

According to a specific embodiment, the plant further comprises a CO2 capturing unit connected to the fuel gas line for capturing at least a part of the CO2 present in fuel gas.

According to a specific embodiment, the plant further comprises a methanol production unit from hydrogen and both CO2 and CO; CO2 + 3H2 = CH3OH + H2O

According to still another embodiment, the plant further comprising a waste sorting unit for sorting of the incoming waste into fraction having different calorific value, and additionally facilities to remix fractions of the waste to keep a substantially stable calorific value of the input to the thermolysis and pyrolysis reactor.

The plant may additionally comprise an autoclave system for autoclaving the waste before introduction into the sorting unit.

According to one embodiment, the first separation unit is a membrane separation unit. A preferred first separation unit comprises two membranes.

According to yet an embodiment, the second separation unit is a membrane separation unit.

For both the first and second separation units, membrane separation units are preferred, as membrane-based separation units for these purposes are known to have relatively low cost, they are reliable, and have low running costs.

According to an embodiment the plant would operate in a boat using as feedstock the organic waste present in oceans and seas, as plastics.

The method described above would work with the conversion unit to obtain maximum hydrogen and with the Methanol production unit for its storage and use in fuel cells, which in turn would provide the energy necessary for the autogenous operation of the plant.

According to the second aspect, the present invention relates to a plant. In a second part, to a plant for carrying out the above described second part of the method. The plant, according to the first part, comprising:

A cyclonic particle separator for processing a fluid comprising solid particles, the cyclonic particle separator comprising a rotor, at least one electromagnetic coil and/or at least one ultra-sound generator, and a main chamber, the main chamber comprising at least one section of non-conducting material, where the rotor is arranged to induce a rotation of the fluid in the chamber and the electromagnetic coils are arranged to generate a pulsed magnetic field in the chamber and/or the ultra-sound generator generate a pulse in connection to the at least one section of non-conducting material, the pulsed magnetic field or ultra-sound vibration being arranged to vibrate the solid particles, thereby liberating the solid particles from each other.

In an embodiment, the cyclonic particle separator is comprising an impeller, connected to the rotor.

In an embodiment, the rotor comprises a plurality of holes arranged to admit solid particles into an interior cavity.

In an embodiment, the particle separator is arranged to separate the fluid into at least a first and second output stream, the first output stream being extracted at a first outlet and the second output stream being extracted at a second outlet, the first and second outlet being arranged in different positions on the particle separator, wherein the solid particles in the first and second output stream have different, relative to each other, weights.

In an embodiment, the particle separator is arranged to separate the fluid into three output streams extracted at a first, second and third outlet, where the first, second and third outlets being arranged in different positions on the particle separator, wherein the solid particles in each output stream have different, relative to each other, weights.

In a preferred embodiment the plant is comprising at least one comminutor and at least one cyclonic particle separator.

In an embodiment, the comminutor comprises a spinnable shaft and two or more processing chambers, separated by segmented plates, wherein each processing chamber comprises a rotor disc attached to the shaft and one or more vortex generators placed in a side wall apex corner of the processing chambers, wherein the source material is fed into the comminutor and particles are liberated from the source material by means of a chaotic vortex flow of the source material and the liberated products generated in the processing chambers.

### BRIEF DESCRIPTION OF DRAWINGS

Figure 1 is a flow diagram for a waste handling plant according to the first part of the invention.
Figure 2 is a flow diagram illustrating an embodiment according to the first part of the present invention in further detail than figure 1.
Figure 3 is a principle drawing of a reactor to be used in the first part of the present invention.
Figure 4 is a principle drawing of a waste sorting system that may be used in the first part of the present invention.
Figure 5 is a flow diagram of an alternative embodiment of the first part of the present invention.
Figure 5b is flow diagram of an alternative embodiment the first part of of the present invention.
Figure 6 is a Methanol production unit scheme of the first part of the present invention.
Figure 7 schematically illustrates a vertical section of a cyclonic particle separator.
Figure 8 schematically illustrates a typical rotor design of the cyclonic particle separator.
Figure 9 schematically illustrates one from prior art known comminutor liberation and micronizer apparatus suitable for liberation of material components in a matrix.
Figure 10 is a flow chart illustrating methods for liberation components in a matrix followed by separation of these components based on each component's specific density.
Figure 11 is a flow chart showing the presented invention in both parallel and serial configurations.
Figures 12A - 12C schematically illustrate comminutor liberation and micronizer apparatus suitable for improved liberation of material components in a matrix.
Figure 13 schematically illustrates a system for protein liberation.

**Reference list:**

| | | | |
|---|---|---|---|
| 1 | waste line | | |
| 2 | waste pre-treatment section | 55 | high temperature chamber outlet |
| 3 | autoclave system | 59 | heating jacket |
| 4 | wastewater line | 60 | secondary reactors |
| 5 | wastewater treatment unit | 61 | raw gas withdrawal line |
| 6 | treated water line | 62 | first gas cleaning unit |
| 7 | autoclaved waste line(s) | 63 | wastewater line |
| 8 | sorting system | 64 | scurbbed raw gas line |
| 10 | non-recyclables line | 65 | gas separation unit |
| 11 | humidity adjustment unit | 66 | hydrogen rich gas line |
| 12 | excess water line | 67 | gas line |
| 13 | pre-treated waste line | 68 | first light oil line |
| 20 | gas production and treatment section | 69 | solid line(s) |
| 21 | pyrolysis and thermolysis unit | 70 | conversion unit |
| 22 | fuel gas line | 71 | steam line |
| | | 72 | gas line |
| 23 | solid rest line | 74 | cracked gas line |
| 24 | separation unit | 75 | second gas cleaning unit |
| | | 76 | used water line |
| 25 | CO2 export line | 77 | second light oil line |
| 26 | low CO2 fuel gas line | 78 | heating collar |
| 30 | gas turbine power plant | 79 | heating jacket |
| 31 | electric power line | 80 | cracking unit |
| 32 | steam line | 81 | light oil recycle line |
| 33 | steam line(s) | 82 | exhaust line |
| 39 | startup gas line | 83 | exhaust gas return line |
| 40 | reactor | 90 | char handling unit |
| 41 | gas line | 91 | char line |
| 45 | mixing chamber | 92 | ash line |
| 46 | heating jacket | 95 | supply line(s) |
| 47 | air line | 96 | supply line(s) |
| 48 | flue gas line | 97 | supply line(s) |
| 49 | motor | 100 | magnetic separator |
| 50 | screw conveyor | 101 | first icon fraction |
| 51 | high temperature chamber | 102 | first screen |
| 52 | pyrolysis gas line | 103 | calorific value fraction |
| 53 | mixing arms | 104 | second screen |
| 54 | heating jacket | 105 | separator |
| 106 | magnetic drum over belt separator | 310 | comminutor |
| 107 | flock/fibre fraction | 317 | entrance opening |
| 108 | first wind sifting separator | 318 | spinnable shift |
| 109 | light materials fraction | 382 | processing chamber(s) |
| 110 | screening unit | 383 | segmented plate |
| 111 | magnetic drum over belt separator | 384 | rotor disc |
| 112 | separator | 385 | vortex generator |
| 113 | second wind sifting separator | 386 | side wall |
| 114 | magnetic drum over belt separator | 387 | rotor vane(s) |
| 115 | non-ferrous separator | 400 | comminution |
| 116 | near infrared detection separator section | 401 | size fractionating |
| 117 | ferrous fraction | 402 | fluid |
| 118 | PVC fraction | 403 | first cyclonic particle separator |
| 119 | Nylon fraction | 404 | second cyclonic particle separator |
| | | 410 | size fraction |
| 120 | PET fraction | 411 | size fraction |
| 121 | mixed plastic fraction | 412 | size fraction |
| | | 420 | solid particles of a density |
| 122 | high calorific end product fraction | 421 | solid particles of a density |
| 123 | non-ferrous fraction | 422 | solid particles of a density |
| 200 | cyclonic particle separator | 500 | bearing |
| 210 | main chamber | 501 | entry flow |
| 211 | inlet | 502 | exit opening |
| 212 | third outler | 503 | exit flow |
| 213 | first outlet | 504 | high pressure |
| 214 | second outlet | 505 | low pressure |
| 215 | impeller | 506 | first flow generator |
| 216 | ultrasound generator | 506A | first flow generator portion |
| 217 | electromagnetic coil | 506B | first flow generator portion |
| 220 | rotor | 507 | second flow generator |
| 221a, b | holes | 508 | spin direction |
| 222 | interior cavity | 601 | imput unit |
| 223 | chamber | 602 | cleaning unit |
| 225 | end cap | 603 | dehulling unit |
| | | 604 | fractionating unit |
| | | 605 | packing unit |
| 606 | agglomerating/pelletizing unit | 607 | particle size adjusting unit |
| | | 608 | output unit |

### DETAILED DESCRIPTION

### Detailed description of the first part of the invention

Throughout the description and claims, the pressure is about ambient pressure, i.e. about atmospheric pressure, if nothing else is specifically stated. Any boiling point and/or boiling ranges indicated are boiling points or boiling ranges at atmospheric pressure, if not specifically defined differently.

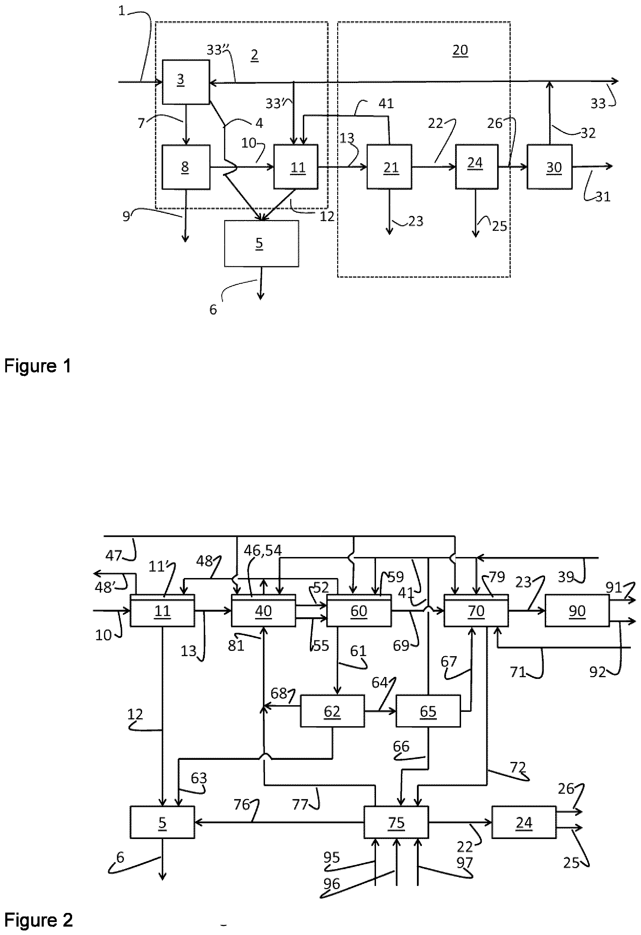

Figure 1 is an overview illustration of an embodiment of the present invention according to the first part, where incoming is introduced via a waste line 1, into a waste pre-treatment section 2.

The pre-treatment section of the illustrated embodiment comprises an autoclave system 3, into which the MSW in line 1 is first introduced.

Autoclaves suitable for the purpose are delivered i.a. by AeroThermal Group, UK. The autoclave system preferably comprises a series of parallel arranged rotating autoclaves wherein the MSW is treated batchwise.

During normal operation the autoclaves will be in different parts of an autoclave cycle, giving a semi-continuous operation.

The autoclave cycle comprises the following steps: Filling MSW into the autoclave, and thereafter closing the autoclave. Closing and then evacuating the autoclave to remove most of the air from the inside of the autoclave. Introduction of steam into the autoclave to heat the autoclave and its content to about 160 °C typical at about 5,2 barg (bar gauge).

Keeping the temperature and pressure for a predetermined period, such as e.g., 30-40 minutes. The autoclaves are rotated during this process.

During the autoclaving process, the MSW in the autoclave is sanitized, and the volume is typically reduced by about 60%. The heat treatment kills all the bacteria and other degrading life in the MSW, and thus removes the odor of the waste. Plastics, such as PE and PET, reach their glass-rubber transition stage and are reduced through deformation. Plastic films are mostly unaffected by the autoclaving but are cleaned during the process cycle. Grass cuttings and small yard waste are reduced to cellulose fibres. Additionally, lignin and other macromolecules are broken down, and/or coagulated. The autoclaving process thus reduces bonds between parts of the MSW and makes the further processing easier.

After finalization of the heat treatment, the autoclave is vented and the steam therein is introduced to a condenser, where the steam is condensed to give water. The water is withdrawn through a wastewater line 4 and is introduced into a wastewater treatment unit 5 treated before being released or re-used, to avoid pollution to the surroundings or to avoid accumulation of pollutants in water circulating in the plant. Treated wastewater is withdrawn through a treated water line 6 to be released, further treated or re-used.

The autoclave is then again filled to restart the autoclave cycle. To obtain a semi-continuous process, the cycles of the autoclaves in parallel, are controlled so that they are out of phase which each other.

The autoclaved MSW is thereafter taken out of the autoclaves 3 through autoclaved waste lines 7 and introduced into a sorting system 8 comprising a set of conveyors and sorting devices, separating the autoclaved MSW into different fractions. The sorting system is preferably a state-of-the-art sorting system for separating the incoming MSW in a plurality of fractions, such as plants marketed and delivered by Stadler Anlagenbau GmbH, Germany.

In such a sorting plant the MSW is sorted into fractions such as:
PET (polyethylene terephthalate),
HDPE (high-density polyethylene),
Mixed plastics, that may be sorted in individual fractions,
Films,
Tetra Packs,
Mixed paper,
SRF (solid recovered fuel),
Non-ferrous metals,
Ferrous metals, and/or
Residues (non-combustible solid residue).

Plastics rich in nitrogen or chlorine are unwanted in most of the potential uses for the fuel produced according to the invention. Nylon, which primarily is contained in carpets, contains nitrogen, and result in formation of NOx in a plant for combustion, whereas PVC produces HCI, which is strongly acidic in combination with water. Additionally, both nylon and PVC may be sold as valuable products for recirculation. Separation of nylon and PVC from the remaining plastics may be performed by means of computer operated wind sifting in combination with near infrared detection, as further described below. A minor amount of Nylon and/or PVC are, however, acceptable as a contamination to the different fractions. PVC may by be used, provided that the weight of PVC amounts to less than 1 % by weight of the total MSW.

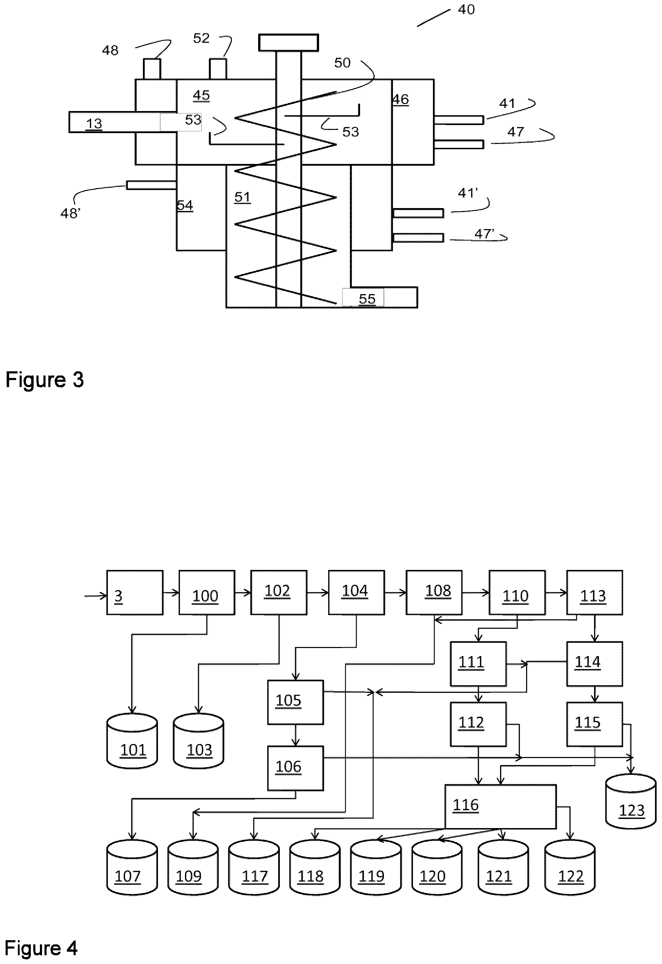

Figure 4 illustrates a typical flow diagram for a sorting plant, according to the first part. The waste enters the plant, as above described, through the waste line 1 and is introduced into the autoclave 3. The autoclaved waste is withdrawn from the autoclave 3 and introduced via line 7 into a first magnetic separator 100 which catches big ferrous pieces, that are present in the autoclaved waste material, and removes it from the remaining waste, into a first iron fraction 101.

After leaving the first magnetic separator, the waste is further sorted in a first screen 102, such as a finger screen, dimensioned to remove large items, such as items having a size >200 mm and stringy materials like wrapping foils, textile and rope, by allowing particle of <200 mm through the screen. The >200 mm fraction is collected in a large high calorific value fraction 103. The skilled person will understand that what is regarded as a large item in such a plant is dependent on the actual plant and that the given limit of 200 mm may differ from plant to plant. If deemed necessary, a sorting unit comprising a near infrared detection system may be arranged to remove any nylon and/or PVC from said fraction.

The <200 mm material passing through the first screen 102, is thereafter screened in a second screen 104, such as a Starscreen^{®}, to give a <12 mm fraction, and a +12 mm fraction. The <12 mm fraction is introduced into a magnetic drum over belt separator 106, to separate an iron containing waste fraction that is combined with other iron containing fractions as will be described below. The non-ferrous fraction not being removed in the separator 106, is introduced into a non-ferrous separator 106, where the components are separated based on their density to give a non-ferrous heavy fraction that is combined with other non-ferrous heavy fractions as described in more details below. The lighter material is collected in a flock/fibre fraction 107.

The +12 mm fraction is introduced into a first wind sifting separator 108, where most of the less dense material is separated from the denser material by means of blowing air and gravity. Light materials, mostly comprising plastics in addition to some additional light materials are led into a light materials fraction 109. The light material fraction may be further sorted to separate different plastic and/or to separate plastic from non-plastic material.

The dense fraction from the first wind sifting separator 108 is introduced into a screening unit 110 separating material according to size, i.e. <50 mm and >50 mm. The <50 mm material is introduced into a magnetic drum over belt separator 111, to separate a ferrous fraction that is handled as described below, and a non-ferrous fraction that is introduced into a non-ferrous separator, separating the dense material, typically metals, from less denser materials. The dense material is collected as described below, whereas the less dense material is introducing into a near infrared detection separator section 116 as will be described below.

The >50 mm material from the screening unit 110, is introduced into a second wind sifting separator 113. The less dense material from the second wind sifting separator 113 is combined with the less dense material from the first wind sifting separator 108, as described above. The dense material from the second wind sifting separator 113 is introduced into a magnetic drum over belt separator 114, to give a ferrous fraction that is combined with the ferrous material from the separators 105 and 111 as described above and introduced into a ferrous fraction 117.

The non-ferrous fraction from separator 114 is introduced into a non-ferrous separator 115, corresponding to separators 106 and 112, to give a dense fraction that is combined with the corresponding fractions from separators 106 and 112 and collected as a non-ferrous fraction 123.

The near infrared separator section 116 typically comprises several corresponding separators, optionally with a ferrous separator for a final separation of ferrous materials from the remaining waste. The infrared separators, e.g., four separators, are all corresponding separators that are adjusted for separation of different types of plastic materials. The skilled person understands how to adjust the detectors for separation of the different plastic types, based on their chemical composition that is detectable using near infrared detectors.

The near infrared separator section 116 may, if it comprises four infrared separators as indicated below, will be able to separate the introduced material into fractions as PCV in a fraction 118, nylon in a fraction 119, PET into a fraction 120, mixed plastics into a fraction 121, a high calorific end product fraction 122, and optionally an additionally not shown metal fraction.

Recyclable materials such as the ferrous fraction 101, 117, the non-ferrous fraction 123, the PVC fraction 118 and nylon fraction 119, are exported from the plant. The PVC fraction 118 may, however, be used internally for fuel gas generation, provided that the PVC amounts to less than about 1 % by weight of the total sorted MSW added. Even other fractions, such as the PET fraction 120 may be exported if all PET is not needed for the gas production.

Non-recyclable and combustible waste fractions are withdrawn from the sorting plant, even though the export lines are not illustrated in figure 4. The non-recyclables are introduced into a humidity adjustment unit 11 via a non-recyclables line 10.

The skilled person understands that the size limits given for the fractions above are examples, and that the size limits may differ substantially depending on the supplier of the plant and the concrete plans for a new plant. The number of fractions and the sequence of the different sorting processes may also differ. Additionally, fractions that are not sufficiently homogenous after sorting, may be recycled to an earlier sorting step.

A normal MSW has normally a humidity of about 20 to 30 % by weight.

After autoclaving the humidity has normally increased to about 50 % by weight. The humidity required for further treatment in normally from about 10 to 25 % by weight, such as from 15 to 20 % by weight, e.g., about 18 % by weight. Accordingly, the humidity of the waste normally has to be dried. If the waste is too dry, water and/or steam are added to humidify the waste. Any excess water is removed from the humidity controlling unit 11 through excess water line 12 and introduced into the wastewater treatment unit 5, as described above. Alternatively, water and/or steam may be added through not shown line(s).

Drying of the MSW may be obtained by blowing air through the MSW, or by heating the MSW, or a combination thereof. Heat for drying of the non-recyclables in the humidity adjustment unit 11, may come from hot water/steam generated in a later described gas turbine power plant 30, and/or by firing of combustible gas produced later gas producing units, in a combustion chamber arranged for heating of the material to be dried.

The skilled person will understand that the described pre-treatment section 2 is a presently preferred pre-treatment section and that any pre-treatment unit that can produce a sorted and fractionated waste may replace the described unit without leaving the scope of the invention. Alternative pre-treatment sections may be shredder type waste treatment plants, etc.

From the humidity adjustment unit 11, the sorted and humidity adjusted waste is withdrawn through a pre-treated waste line 13 to be introduced into a gas production and treatment section 20. The pre-treated waste is via the pre-treated waste line 13 introduced into a pyrolysis and thermolysis unit 21, for production of a synthesis gas, mainly comprising hydrogen, CO, and CO2, that is withdrawn through a fuel gas line 22 for the intended use, and a solid rest, mostly comprising carbon, that is withdrawn in line 23, that is exported from the plant for further use or deposition. The pyrolysis and thermolysis unit 21 will be further described below.

The skilled person will understand that if the waste is too dry, water and/or steam may be introduced into waste when the waste is feed into the reactor 21 in addition to or in lieu of adding water and/or steam in a separate humidity adjustment unit.

The synthesis gas withdrawn from in line 22 may be used as it is, or be introduced into an optional separation unit 24, for separation, or capturing of CO2 from the synthesis gas. In the second separation unit, the incoming synthesis gas is separated, to produce a CO2 stream that is withdrawn through a CO2 export line 25, and a low CO2 synthesis gas, that is withdrawn through a low CO2 fuel gas line 26. The second separation unit 21 may be of any well-known type, such as an absorption/desorption unit, pressure swing unit, or a membrane-based unit. The presently preferred CO2 capture unit is a membrane-based unit, due to its low running costs. Such solutions are commercially available.

CO2 from the CO2 capture unit and exported through a CO2 export line 25 may be sent to a methanol production unit or a carbon storage facility to store the CO2 in a depleted oil or gas well, or in an aquifer in a well-known way, or be sold for use for pressure support in enhance oil recovery. Alternatively, the captured CO2 or parts thereof, may be used for agricultural or aquaculture purposes, and be introduced into greenhouses or plants for algae production as a source of carbon.

The gas produced in the thermolysis and pyrolysis unit 21 have many potential uses. In the illustrated embodiment, the gas is introduced into a gas turbine after being passed through the CO2 capture unit 24. The gas may, optionally, be sent for its final use, such as e.g., a gas turbine, without CO2 capture, depending on the intended use. For most purposes, the CO2 present in the gas in line 22 is an inert gas that reduces the calorific value of the gas and increases the volume of the gas. Both from such a technical viewpoint, and from an environmental viewpoint, it is therefore an advantage to capture CO2, before using or selling the produced gas. By capturing CO2, the CO2 footprint of the plant is substantially reduced.

In the illustrated embodiment, the produced gas leaving the gas production and treatment unit 20 in line 26, is introduced into a gas turbine plant 30, to produce electrical power that may be used for internal processes requiring electrical power, and where the surplus electric energy may be sold to the electric grid through an electric power line 31.

Steam produced in the gas turbine plant 30, is withdrawn through a steam line 32, to deliver hot water and/or steam to heat requiring processes in the plant, such as the autoclaves, 3, and drying in the humidity adjusting unit 11 via internal steam lines 33', 33". The skilled person will also be able to identify other possible internal consumers of the heat energy in the hot water or steam. Excess heat in form of steam and/or hot water may be exported from the plant for e.g., district heating through steam export line 33.

According to an alternative embodiment, the gas turbine 30 is substituted with a Fischer-Tropsch (FT) plant, for conversion of the synthesis gas to synthetic hydrocarbons in a well-known way.

The skilled person will understand that the present gas production and treatment unit 20 may be used for other hydrocarbon rich materials than MSW, such as e.g., more homogenous waste materials as waste plastic materials such as agricultural plastic waste, or tires. Such materials have humidity that is too low for efficient thermolysis and pyrolysis in unit 21. Water may be added to such types of waste in the humidity adjustment unit 11 and/or be added into the thermolysis and pyrolysis unit 21 through a not shown water introduction line, to give water content in unit 21 of about 20 % by weight of the introduced waste.

The solids withdrawn from the thermolysis and pyrolysis unit 21 through line 22, may differ in composition and potential use based on the incoming waste. One potential use for the solid rest, withdrawn through line 22, is for soil improvement, by spreading the material on farmland.

Figure 2 is an illustration one embodiment of the gas production and treatment unit 20, but includes also the humidity controlling unit 11, and figure 3 is a principle sketch of a reactor 40, being a central part of the treatment unit 20.

Waste is introduced into the humidity controlling unit 11, here illustrated as a drying unit, through waste line 10 as described above. Heat for drying the waste in the humidity controlling unit 11 may supplied to a heating chamber 11', as steam through line 33', or as hot flue gas in flue gas line 48 from sources that will be further explained below. After being cooled while heating and drying the waste, the cooled exhaust is released through an exhaust gas release line 48'.

From the humidity controlling unit 11 , the waste is introduced into a primary reactor 40 via a humidified waste line 13, and introduced into a primary reactor 40, e.g., of the kind described in the above identified EP1160307. The skilled person will understand that the illustrated reactor 40 may be one reactor or two or more reactors arranged in parallel. The same applies to all elements described below.

Waste from the humidity control unit 11 is introduced into the primary reactor 40 through the waste line 13 into a mixing chamber 45 surrounded by a heating jacket 46 heated by combustion of heating gas introduced through a heating gas line 41 and air that is introduced through an airline 47. Exhaust gas from the combustion is withdrawn through an exhaust release line 48.

A screw conveyor 50, operated by means of a motor 49, is arranged in the mixing chamber 45, the screw conveyor extending 50 into a high temperature chamber 51. Optional mixing arms 53 may be connected to the axis of the screw conveyor, for mixing of the incoming waste with waste already partly processed in the mixing chamber.

The waste mixture in the mixing chamber is transported into the high temperature chamber 51 by means of the screw conveyor 50. In the high temperature chamber 51 the waste is further heated by means of combustion of heating gas in heating jacket 54, surrounding the high temperature chamber 51. Heating gas is introduced into the heating jacket 54 through a gas line 41', and air for the combustion is introduced through an airline 47'. A gas line 39 is provided to add natural gas into line 41 during start-up of the plant.

The total waste in the mixing chamber 45 and high temperature chamber 51 is thus heated in absence of oxygen to effect thermolysis and pyrolysis therein. The waste in the mixing chamber is heated both by the heating jacket 46 and pyrolysis and thermolysis gases generated in the mixing chamber and the high temperature chamber. At least a part of the gases generated through pyrolysis and thermolysis in the mixing chamber and high temperature chamber is withdrawn through a pyrolysis gas line 52 connected to the mixing chamber. The temperature in the mixing chamber is typically from 500 to 700 °C, whereas the temperature in the high temperature chamber is higher due to the additional heating, such as typically about 1000 °C. The pressure in the reactor 40 is typically about ambient pressure or slightly higher.

Due to the thermolysis and pyrolysis in the reactor 40, a substantial part of the original mass of the waste is converted to gas by well-known thermolysis or pyrolysis reactions. Small and large organic molecules such as synthetic or natural polymers or macromolecules, such as carbohydrates, fats, proteins, plastics etc., are thermally cracked, i.e., molecules are split via different reactions to form smaller molecules. The humidity present in the waste, and/or water/steam added into the waste during introduction into the mixing chamber results in some steam cracking reactions to happen in the reactor as well as heat cracking. Due to the presence of water in the reactor 40, several reactions take place therein. First of all, the temperature causes thermolysis or pyrolysis of the hydrocarbon material introduced into the reactor, to give a solid char rest and gases, primarily hydrogen, methane, minor amount of lower hydrocarbons and tars, or higher hydrocarbons that will condensate at lower temperatures. Additionally, the water present in the reaction mixture in the reactor 50, will react with carbon according to the reactions:

(1) C + H2O ¾CO + H2 (gasification reaction)

(2) CO + H₂O ¾CO₂ + H₂ (water gas shift reaction)

As mentioned above, a part of the generated gas may be withdrawn through line 52, as will be described in further detail below. The remaining mass of solid waste is withdrawn from the bottom part of the high temperature chamber 51 through a high temperature chamber outlet 55 and are directly introduced into a series of secondary reactors 60, here illustrated by one reactor 60. The gas withdrawn trough line 52 is introduced into the first secondary reactor 60, to participate in the further breakdown of hydrocarbons in the secondary reactor 60.

The secondary reactor(s) 60 have a common design being tubular reactor(s), provided with a screw conveyor both for mixing the solid material and the gas, and for carrying the remaining solid material through the reactor(s). Additionally, the reactors are provided a heating jacket 59 heated by combustion as for the primary reactor 40, for further pyrolysis and thermolysis of the remaining solid waste, and to ascertain that generated gas is released from the solid waste therein. The temperature in the secondary reactors is upheld at about the same temperature as in the high temperature chamber. Dependent on the specific plant, two or more secondary reactors 60 may be serially connected to provide maximum thermolysis and pyrolysis of the waste. The solid rest from the last secondary reactor 60 is withdrawn through a solids line 69 and is introduced into a conversion unit 70.

Gases generated and/or released from the solid carbonized waste, are withdrawn from the secondary reactors 60 through a raw gas withdrawal line 61 and are introduced into a first gas cleaning unit 62. The first gas cleaning unit 62 is provided for removal of tars, oils, and dust particles from the raw gas stream. The first cleaning unit 62 comprises a series of scrubbers where the gas is washed in a buffered liquid medium. The first cleaning unit may be of the kind described in EP1316351A2 (DR. ANDREAS LINGER, 04.06.2003). The temperature of the raw gas is reduced in stages, from one scrubber to the next, to separate the condensate, and solid particles from the gas. The temperature, pH and composition of the scrubbing media are controlled in a conventional way.

Wastewater from the scrubbers is removed from the first gas cleaning unit 62 through a wastewater line 63 and is introduced into the above-mentioned wastewater treatment unit 5.

Scrubbed raw gas, mainly comprising CO, CO2 and hydrocarbons having a boiling range below 170 °C, is removed from the first gas cleaning unit 62 via a scrubbed raw gas line 64 and introduced into a gas separation unit 65 comprising two membrane based separation units, one membrane unit to give a hydrogen enriched gas fraction that is withdrawn through a hydrogen rich gas line 66, and one membrane unit to give a hydrocarbon rich fraction that is withdrawn through a heat gas line 41, to be used for firing for heat purposes as described above and a third raw gas fraction comprising a mixture of gases, mainly lower hydrocarbons, CO, CO2, and some hydrogen, that is withdrawn through a gas line 67. The gas in line 67 is introduced into the above-mentioned conversion unit 70.

The solids introduced into the conversion unit 70 in line 69, are heated by combustion of heat gas in a heating jacket 79 and is reacted with the gas introduced through line 67, and steam introduced through a steam line 71 to further break down hydrocarbons in the gas, and for gasification of carbon in the solids, according to the "gasification" reaction:

H₂O + C = CO + H₂

to add additional synthesis gas to the generated gas flow. Dependent on the amount of steam introduced through the steam line 71, the generated CO may be further converted to CO2 and hydrogen, by the reaction CO + H₂O = CO₂ + H₂.

The conversion in the conversion unit 70 does, however, result in a higher concentration of hydrogen in the product gas and with steam reforming of CH¤ in gas line 67, at the cost of gas used for heating the conversion unit 70.

Gas generated in the conversion unit 70 is withdrawn through a converted gas line 72, and is introduced into a second gas cleaning unit 75, were the gas is combined with the gas in the above described hydrogen rich gas line 66, and is scrubbed in a series of scrubbers, where the calcium hydroxide or sulphuric acid, and/or other chemicals, such as Ca(OH)2, and sulphuric acid, used for removal of unwanted elements in the gas, may be included in the scrubbing solution. Water for scrubbing, and aqueous solutions of scrubbing chemicals are added through supply lines 95, 96 and 97, respectively. Used scrubbing solution is removed through a used water line 76 and introduced into the wastewater unit 5.

The solid waste from the converter 70 is withdrawn through a solids waste line 23 and is optionally introduced into a char handling unit 90, where the solid material is separated into char, that is withdrawn through a char line 91, and a mixture of char and ash that is withdrawn through an ash line 92. The char and ash are exported for the plant, sold/deposed, or further treated according to the second part of the invention as described in detail further below.

Heating gas for heating jackets 46, 54, 59, 79 is introduced through lines 41 as described above. During normal operation the heating gas is withdrawn from the gas separation unit 65 as described above. Startup heating gas for starting up the plant, or supplementary gas in the case that the heating gas withdrawn from the gas separation has to be supplemented to give the required heating, may be introduced through a startup gas line 39. Oxidant, such as air, or other gas including oxygen, to obtain combustion and generation of heat in the heating jackets by combusting the heating gas, is added through the air line 47.

A first light oil fraction having a boiling range from about 170-350 °C at atmospheric pressure is withdrawn from the first gas cleaning unit 62 via a first light oil line 68 and introduced into a light oil recycle line 81 for introduction of light oils into the primary reactor 40. A second light oils fraction having a boiling range from about 100 - 200 °C at atmospheric pressure is withdrawn from the second gas cleaning unit 75 through a second light oil line 77 and is also introduced into the light oils recycle line 81. The light oil fractions that are recycled into the primary reactor participates in the reactions in the primary reactor 40 and are further broken down as described above.

Raw fuel gas is withdrawn through the synthesis gas line 22 and may be introduced into the CO2 separation unit 24 for removal of a substantial part of the CO2 from the gas as described above, as described above.

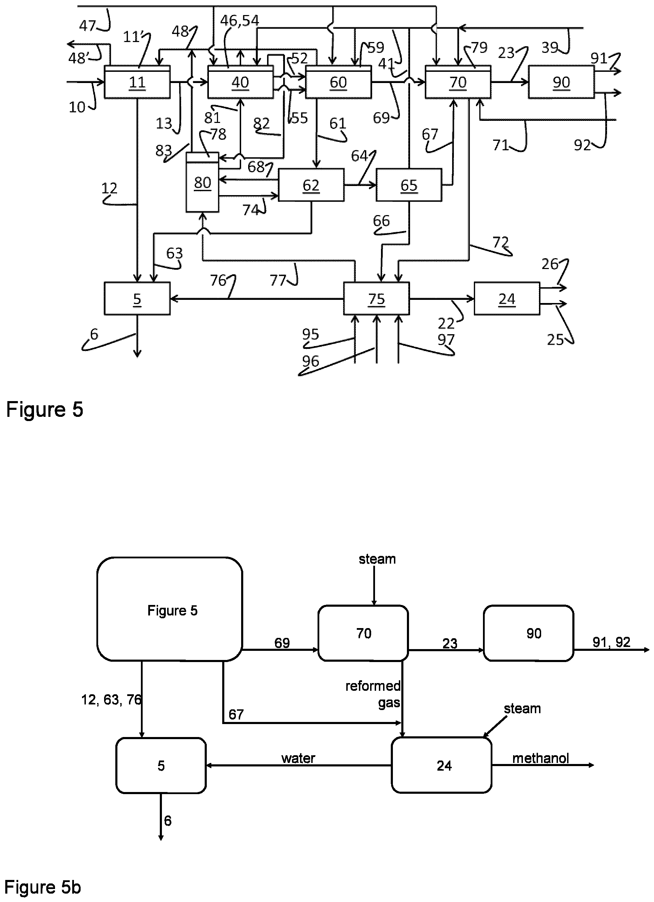

Figure 5 illustrates a specific embodiment of the present invention where a cracking unit 80 is arranged for receiving and cracking the first and the second light oil fractions in lines 68 and 77. In the cracking unit 80, the hydrocarbons are thermally/catalytically cracked by heating the cracking unit with exhaust gas from the heating collars 46, 54 from the primary reactor 40 that is withdrawn through an exhaust gas line 82 and introduced into a heating collar 78 surrounding the cracking unit 80. The spent exhaust gas from the heating collar 78 is returned into the above-described exhaust line 48 through an exhaust gas return line 83.

The light oil fraction is thermally cracked in the cracking unit to produce synthesis gas, mainly comprising hydrogen, CO, and CO2. The cracking in the cracking unit is not complete. The light oils that are not cracked in the cracking unit are withdrawn through a light oils recycle line 81, to be recycled into the primary reactor as above described.

The synthesis gas generated in the cracking unit 80 is withdrawn through a cracked gas line 74 and introduced into the first gas washing section 62 as a part of the gas to be washed and separated therein.

Table 1 below gives typical values for kind of matter, mass flow, temperature, and pressure in different lines in an exemplary waste handling plant according to the embodiment of present invention illustrated in figure 5, for handling of MSW, where the resulting gas is intended for a gas turbine for generation of electric power and district heating and/or cooling.

**table 1**

| Material in the flow | Line No. | Mass (kg/h) | Temp (°) | Pressure (mbar) |
|---|---|---|---|---|
| Incoming MSW | 10 | 14000 | 20 | |
| Dried MSW | 13 | 13200 | 100 | |
| CO₂ / fuel gas | 22 | 7600 | 800 | 50 |
| CO₂ | 25 | 3300 | | |
| Fuel gas | 26 | 4300 | | |
| Raw gas | 61 | 12800 | 800 | 50 |
| Heating gas | 41 | 3800 | | |
| Char | 91 | 1400 | | |
| Ash / char | 92 | 1400 | | |

It can inter alia be seen from the table, that the total mass is reduced by about 80% by weight. The amount of solids is i.e. dependent on the conversion in the conversion unit 70, as the weight of the carbonaceous rest may be substantially reduced by conversion of carbon by the gasification reaction mentioned above. In addition to this substantial reduction of weight, and correspondingly, volume, the solid material exported from the plant has valuable properties making it possible to sell the product at the marketplace. The solid waste may be used in agriculture for soil improvement, and/or find use in different industrial applications. If there is no marked for the solid waste, it may be safely deposed, which is not the case for the MSW before treatment.

The input waste in line 10 may vary over time, a variation that may influence on the WOBBE-index. Stabilization of the WOBBE index may be accomplished by one or more measures, such as limiting the inhomogeneous feed stock into the gas production and treatment unit 20 through line 13, adjusting the humidity of the feed stock in line 13, adjusting the conversion severity in the conversion unit 70 to influence the ratio of hydrogen to CO to CO2 produced therein, actively controlling the CO2 capture in the CO2 capture unit 24, and adjusting the cracking severity of light oils in the cracking unit 80.

The present invention is described with reference to a specific plant and a specific embodiment. The skilled person will know how to adjust the parameters, dependent on the incoming waste, to obtain a fuel gas in line 26 that is suitable for other uses than for a gas turbine according to the state of the art. The fuel gas in line 26 comprises a mixture of CO, hydrogen, CO2, and lower hydrocarbons, such as methane, ethane, propane, and butane. The produced fuel gas may be further separated to give individual fractions of one, two or more of the gases in the mixture. The gasification and thermolysis unit may also be operated at a higher temperature, and/ or by introduction of more steam to cause more steam reforming to shift the products further against hydrogen and CO2.

It is assumed that gas turbines that can accept relatively pure hydrogen as fuel will be available within a few years. The skilled person will know how to adjust the parameters in different parts of the plant to obtain a produced gas in line 26 that mainly comprises hydrogen at the expense of CO, which has a far lower calorific value than hydrogen.

With the produced gas in line 67 and line 72, that mainly comprises hydrogen CO and CO2, Methanol can be produced for its further use in fuel cells according fig 5b
Correspondingly, the skilled person will understand how to adjust the parameters of operation of the plant if the intended use for the fuel gas produced is to produce other products from the fuel gas, instead of generating electrical power and hot water for district heating and/or cooling. The plant will then be adjusted to produce a fuel gas mixture that is optimal for the intended purpose, such as fuel gas for a Fischer Tropsch plant for synthesis of higher hydrocarbons.

Figure 5b illustrates a specific embodiment of the present invention where a Hydrogen-rich gas can be obtained in a single phase or in two phases, and methanol will be obtained as product.

In a single phase the gasification of the carbonaceous solid would occur at the same time as steam reforming in conversion unit 70.

In two phases, the char gasification would be carried out in unit 70 and on the other hand, the catalytic steam reforming of methane and light hydrocarbons with an extra supply of steam in unit 24' between 700-900 °C (FIG 5b).

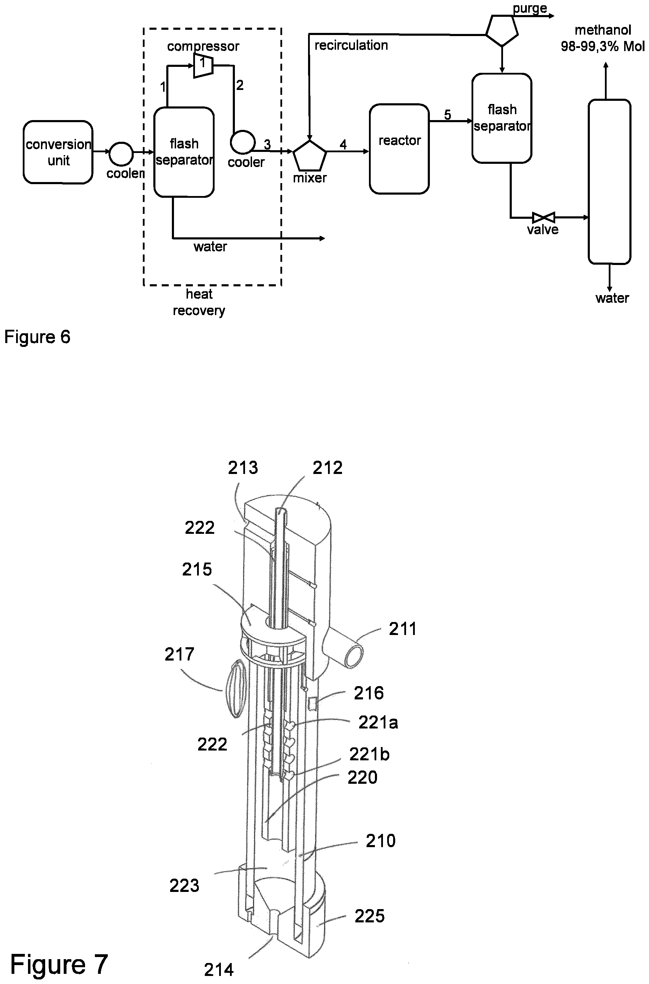

This gas rich in hydrogen, CO, and CO2 would be taken to the heat recovery and gas preparation zone for the synthesis of methanol (FIG. 6) in a reactor with CuO-ZnO-Al2O3 catalysts, Temperature between 240-270 °C, Pressure 40-45 bar.

The conversion to hydrogen reaches 80% and after separation by distillation methanol is obtained with a purity of up to 99.3% molar.

The reactions that would take place are:

CO + 2H₂ = CH₃OH,

and/or

CO₂ + 3H₂ = CH₃OH + H₂O.

Figure 6 describes a methanol production unit scheme. Excess of water and temperature, present in the gas coming from the conversion unit, is removed at the heat recovery and gas conditioning subunit.

Reformed gas is fed to the reactor at 40-45 bar and 240-270 °C. A purge line is needed because of inert components in the stream. Total conversion at the reactor is 85-86% molar in methanol, approximately.

Methanol is separated from water in a distillation column with a purity 98-99% molar.

### Detailed description of the second part of the invention

As described above, in the first part of the invention, the solid waste from the converter 70 is withdrawn through a solids waste line 23 and is optionally introduced into a char handling unit 90, where the solid material is separated into char, that is withdrawn through a char line 91, and a mixture of char and ash that is withdrawn through an ash line 92.

According to a second part of the present invention, the char is further treated. First, optionally, in a comminutor system and second, after the optionally first treating, in a cyclonic particle separator, as described in the following.

Figure 7 shows a cyclonic particle separator 200 for processing a fluid comprising solid particles. The cyclonic particle separator comprises a rotor 220, at least one electromagnetic coil 217 as well as at least one ultra-sound generator 216, and a main chamber 210. The main chamber comprises at least one section of non-conducting material. The rotor 220 is arranged to induce a rotation of the fluid in the chamber 210 and the electromagnetic coil/s 217 and ultrasound generator/s 216 are arranged to generate a pulsed magnetic field in cooperation with ultrasound waves in the fluid in the chamber 210. Depending on the material processed and its response, this can be done together or individually in connection to the at least one section of non-conducting material of the cylindrical wall. The pulsed magnetic field is arranged to induce a weak pulsating magnetic field through the rotating fluid mix. This pulsating field will gently vibrate even weak magnetic particles, thereby liberating any conglomerated particles of same or different sizes from each other. The effect of ultra-sound is similar for other or same type materials. This material effect of either force or combination of forces can be visualized like a group of people in a queue shivering lightly on cold day while waiting for the bus to arrive.

Here, "processing" refers broadly to the act letting the fluid mix undergo a series of steps with a specific aim, such as the aim of separating and sorting the solid particles comprised in the fluid.

The main chamber 210 may be substantially cylindrical in shape. It may also comprise substantially cylindrical and conical sections. Herein, the terms "cylinder", "cylindrical", and "conical" are to be interpreted widely. For instance, a radius of the substantially cylindrical chamber 210 may vary along the central axis of the chamber 210, and a cross section of the chamber 210 at a point along the central axis may not be perfectly circular. An end of the chamber 210 is taken to be a point along the central axis where the chamber ends. The chamber end is a separate formed piece, end cap 225 with one outlet at the bottom of the funnel shaped interior bottom formed as shown in figure 7. The end cap is screwed on to the main chamber with threads and can be twisted and adjusted up or down. This movement of the end cap allow the distance and size of the lower space to be increased or decreased giving an adjustable process parameter for sorting and separation of heavy particles of a specific material mix.

The cyclonic particle separator 200 may also comprise an impeller 215, connected to the rotor 220 by a means of connection such that if the impeller 215 starts to rotate, the movement is extended to the rotor 220.

During operation, the fluid with solid particles mix is introduced into the cyclonic particle separator through an inlet 211 near a first end of the main chamber 210. The fluid may at this point flow with a flow rate induced by an apparatus external to the cyclonic particle separator, such as a slurry pump. On contact with the impeller 215, kinetic energy is transferred from the fluid to the impeller 215, which starts to rotate. As described above, this induces causes the rotor 220 to rotate, which in turn induces a rotation in the fluid. The fluid will thus move in a spiral pattern along the central axis of the chamber 210. The rotation speed of the central rotor 220 is adjusted and controlled by the pressure of the incoming fluid mix as well as the shape and number of vanes of the impeller. These of each other dependent selection also become an important process parameter for certain materials.

The rotor 220 may comprise a plurality of holes 221a, 221b arranged to admit solid particles and fluid into an interior cavity 222. As mentioned above, due to the rotation induced in the fluid, heavier solid particles will be pushed in a radial direction towards the walls of the chamber 210 while lighter solid particles remain closer to the center. The outer shape of the cyclone rotor is such that the medium density particles are trapped in their fluid as the passes the rotor 220, light particles can thus enter through the plurality of holes 221a, 221b into the interior cavity 222. The interior cavity 222 connected to the outlet 213, thus allowing for extraction of light particles mixed in the fluid through a first outlet 213. This light particle stream is light particles in relation to the other two fluid streams and can vary greatly both in size and weight. The term "light" shall only be a qualifier when compared with other solids processed at the same time.

After the fluid passes the rotor 220 it reaches a second end of the main chamber 210. At this turning point the flow of the fluid will be redirected along the central axis of the chamber 210 towards the first end of the chamber 210. As described above, heavier particles will be unlikely to follow the main flow of the fluid at the turning point, instead being collected at the second end of the chamber. The heavier particles may be extracted from the chamber through a second outlet 214.

Here, particle density is referred to using relative terms such as "heavier" and "lighter". The absolute weight of the particles that are considered "heavier" or "lighter" will for example depend on the weight distribution of the particles in the fluid. Absolute weights of heavier and lighter particles can be found through experimentation.

The fluid flowing inside the hollow space of the central axis of the chamber 210 towards the second (bottom) end of the chamber may comprise particles of medium and heavy density in the general fluid stream. The fluid containing the medium weight particles may be extracted through a third outlet 212 through the hollow cyclone shaft at the first end of the apparatus.

Thus, the particle separator may be arranged to separate the slurry stream fluid into at least a second and third output stream. The first output stream may be extracted at a first outlet 212 and the second output stream may be extracted at a second outlet 214, the first 212 and second outlet 214 being arranged in different positions on the particle separator. The main volume of fluid is then released via the third outlet 213. The solid particles in the first, second, and third output streams have different densities for similar sized solid particles in the fluid stream.

In particular, the particle separator may be arranged to separate the fluid into three output streams extracted at a first 213, second 214, and third 212 outlet. The first 213, second 214, and third 212 outlets may be arranged in different positions on the particle separator. The solid particles in each output stream have different density.

It is understood that not all particles in one output stream will have exactly the same weight. Rather, the weight of the particles may fall in a range that is different for each output stream, or the median or mean particle weight may be different for each output stream.

The weight of the particles in each output stream, as well as the fraction of the particles included in each output stream, will for example depend on the flow rate of the fluid and the rotation rate of the impeller 215 and the rotor 220 as well as the size of chamber 223. The cyclone separator wall and the end piece 214 have threads allowing the end piece to be further screwed on to the cyclonic separator wall. Such parameters can be adjusted through routine experimentation until a desired weight distribution is reached for the particles in each output stream. As an example, the flow rate may be adjusted until the lightest 10-30 % of the particles are extracted via the first outlet 213 and the heaviest 5-10 % of the particles extracted via the second outlet 214. The distance between the cone shaped bottom of outlet 214 and the bottom of rotor 220 creates a hollow space 223. The hollow space 223 can be adjusted so that what is classified as heavy particles can further be trimmed based on specific density of these heavy particles. A more abrupt turn of the fluid is accomplished when the distance between the bottom end of the rotor 220 and the top of the bottom cone 225 is shorter.

Particles in a fluid may cluster together to form aggregates of two or more particles. In the cyclonic particle separator described above a pulsed magnetic field and/or ultrasound is used to induce a vibration in the particles. The response of particles to the magnetic field and/or ultrasound will depend on whether the particles comprise ferromagnetic, paramagnetic, or diamagnetic materials. Particles comprising ferromagnetic materials such as iron, nickel or rare earth metals will respond strongly to a magnetic field and may therefore vibrate strongly in response to a pulsed magnetic field. Particles comprising paramagnetic materials such as aluminum will respond less strongly, and particles comprising diamagnetic materials such as copper will respond weakly to the magnetic field, and yet other materials will better respond to ultra-sound vibrations or possibly a combination of the two.

Within a cluster, the particles will generally adhere quite weakly to each other. The vibration induced by the magnetic field and/or ultrasound will cause a strain in the cluster, leading to it breaking apart at the boundaries between the particles. In addition, vibrating clusters may collide with other clusters, increasing the chance of the clusters breaking apart. The pulsed magnetic field and/or ultra-sound thus liberates the particles in such clusters from each other. The movements of these conglomerates can be described as humans shivering in a cold weather. As the individual particles in a cluster may be of different size, composition, and weight, liberating them from each other is crucial for correct sorting of the particles based on density.

As an example, consider a cluster consisting of a three (3) equal sized particles. One (1) of iron oxide and two (2) of silica oxide attached to each other. Their combined density would be a weight of 2.77 grams per cubic centimeter and register together with similar sized particles of aluminum. Instead of correct value for silica dioxide of 1.54 grams per cubic centimeter and 5.24 grams per cubic centimeter for iron oxide. The conglomerated cluster would also be larger than individual parts, and if the particles are not liberated from each other the entire cluster may be sorted incorrectly. However, the pulsed magnetic and/or ultrasound field would induce a strong movement in the ferromagnetic iron oxide, introducing a strain into the cluster and liberating the three particles. The heavy iron oxide could still be extracted among the heaviest fraction of particles at the second outlet 214, but the lighter silica oxide particles might be extracted among the lightest fraction of particles at the third outlet or possibly among the middle density particles in the first outlet 212. Liberation of particles from the cluster thus aids in sorting particles with different mineral content into different output streams based on their relative, to each other, density. The closer these particles are in physical size the finer these cuts can be made. Such physical size screening is well known in prior art.

For example, liberation refers to the process of effectively separating and extracting particles or components from a mixed stream or material. Cyclonic separators, such as cyclone dust collectors or hydrocyclones, utilize centrifugal force to separate particles based on their size, density, and other physical properties. Liberation occurs when particles are freed or released from the mixed material and are separated according to their characteristics. This separation process allows for the recovery and recycling of valuable components or materials from a mixed stream. Liberation is crucial for achieving high efficiency in recycling processes, as it enables the extraction of specific components for reuse or further processing while minimizing waste.

It should be noted that even if a cluster of particles comprises only one ferro- or paramagnetic particle, the pulsed magnetic field and/or the ultrasound will still induce a vibration into the entire cluster.

The pulsed magnetic field is generated using at least one electromagnetic coil 217 arranged in connection to the chamber 210. If several of electromagnetic coils are used, they may be arranged to encircle the chamber 210. The ultrasound generators may be arranged in a similar fashion both around and along the chamber 210.

To generate the pulsed magnetic fields, the electromagnetic coil 217 is supplied with an alternating current and/or voltage. The frequency if of the alternating current or voltage may be adjusted based on knowledge of the magnetic properties of the solid particles or through experimentation. As an example, the frequency may be about 10 Hz and adjusted upwards based on the actual fluid flow speed through the cyclone.

The magnetic field strength will be affected by e.g., the number of coils used, the magnitude of the current, and the number of turns in each coil. These parameters may be adjusted based on knowledge of the magnetic properties of the solid particles or through experimentation.

For the pulsed magnetic field to extend into the main chamber 210, at least a section of the main chamber 210 must be made of a non-conducting material. Herein, non-conducting refers to a material that is not classed as an electric conductor. A non-conducting material may have an electrical conductivity of below 10000 (Ωm)⁻¹, preferably it may have an electrical conductivity below 0.001 (Ωm)⁻¹. As an example, at least a section of the chamber 210 could be made of a non-conducting plastic such as polyvinyl chloride or polypropylene. As another example, at least a section of the chamber 210 could be made of a ceramic material.

In some cases, a source material to be sorted in the cyclonic particle separator 200 is obtained in the form of extended pieces of solid material. An extended piece of solid material could be a piece that is too large to be reliably suspended in a fluid, or a piece that is larger than a few tenths of a millimeter. In this case, the source material may be comminuted in a comminutor before processing in the cyclonic particle separator. Comminutors are known in prior art. For a proper optimized performance of the aforementioned separator, it is important that certain kinds of comminution equipment are used. The absolute best sorting will occur on materials liberated and micronized along natural boundaries as compared with technologies that crush materials with force.

Here, a source material is taken to mean any substance that is comminuted and subsequently sorted in the cyclonic particle separator. According to the first part of the present invention, the source material will typically consist of multiple char components or component materials, and it is desirable to separate said component materials. According to one example, the source material could be char from the char handling unit 90, and the component materials may be minerals such as silica oxide, iron oxide and aluminum oxide. According to another example, not part of the invention, the source material could be packaging and other recyclable products that contain paper, plastic and metallic parts, and the paper, metal, and plastic are then component materials. According to yet another example, not part of the invention, the source material could be slag or dross from an ore treatment process, and the component materials may be minerals such as silica oxide, iron oxide and aluminum oxide.

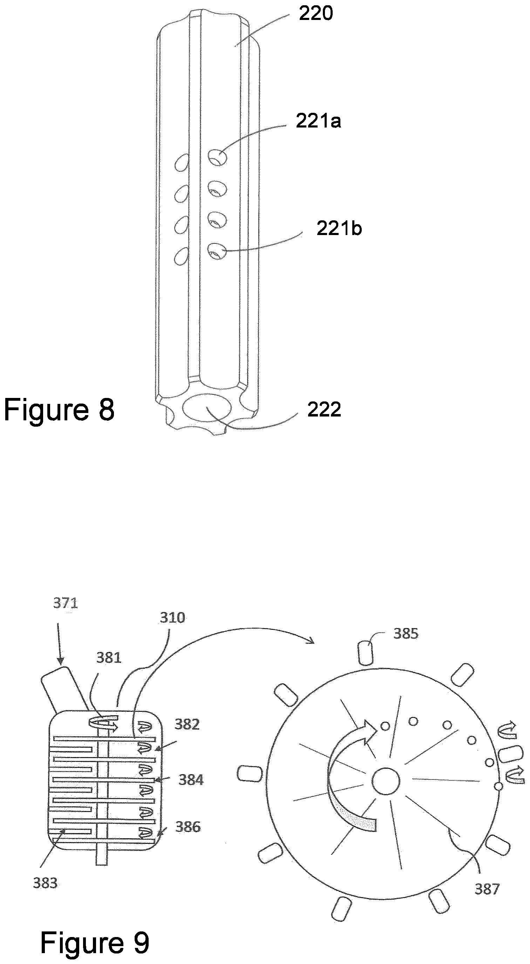

Therefore, there is also herein disclosed a system for processing a source material, the system comprising a comminutor 310, Fig 9 and at least one cyclonic particle separator as described above.

Optionally, the system may also comprise a mixing apparatus for mixing the comminuted particles with a fluid such as a liquid or a gas prior to processing in the cyclonic particle separator. The system may further comprise an apparatus for feeding the fluid comprising the solid particles into the cyclonic particle separator. The apparatus may be a pump, optionally a pump suitable for pumping a fluid consisting of solid particles suspended in a liquid (e.g., a slurry pump). Methods and devices for mixing particles with fluids and for pumping a fluid into a chamber are known in the art.

The comminutor comprised in the system described above may be a comminutor which comprises a spinnable shaft 381 and two or more processing chambers 382, separated by segmented plates 383. Each processing chamber 382 comprises a rotor disc 384 attached to the shaft 381 and one or more vortex generators 385 placed in a side wall 386 apex corner of the processing chambers 382. The source material is fed into the comminution reactor 310 and particles are liberated from the source material by means of a chaotic vortex flow of the source material and the liberated products generated in the processing chambers 382.

A comminutor as described above is an example of a Librixer comminutor, the components and operating principles of which are shown in Figure 9. During operation, a mixture of source material and air enters an entrance opening 371 of the comminutor 310. In the first upper of two or more vertical processing chambers 382, the mixture is spun outwards and will create a circular source material curtain restrained by the polygon shaped walls. The source material curtain spins in either a clockwise or a counterclockwise direction initiated by the vertical rotor assembly consisting of as many rotors as there are processing chambers. The source material flow is restrained by an odd number of flat wall segments, not shown in the schematic drawing. In each apex corner between two flat wall segments, a vortex generator 385 is placed setting up two small vortexes counter to the main flow. The main source material flow curtain interacts with these smaller vortexes consisting of a fluid, most commonly air, and source material in such way that brittle materials are stressed apart along natural boundaries. More flexible materials or fractions of a material, such as fibers, tend to go through relatively un-harmed.

The horizontal view in Figure 9 show one rotor disc. For simplicity, all rotor vanes 387 are straight in the image, although other shapes are also possible. The described source material curtain is established as a circular boundary just inside an inscribed circle created by the inner parts of the apex-corner-placed vortex generators 385. These vortex generators 385 are for clarity just indicated with an oval formed member. As the source material curtain restrained by the processing chamber walls reaches a vortex generator 385, a portion of the fluid stream is folded back on itself creating a small counter rotating vortex (i.e., counter to the main curtain rotation direction). The Coanda effect drags part of the initial vortex fluid over to the back side of the generator, creating a second slightly weaker vortex on the back side of the vortex generator 385. These two small vortexes are indicated by two small bent arrows in Figure 9. For clarity only two such vortexes are indicated, but each generator sets up two respective vortexes. The vortex generators 385 may be shaped from the Greek letter omega, or to a shape similar to two spoons placed "back-to-back", and many others optimizing the performance to different source materials.

The chaotic interference between these small counterrotating vortexes and the main source material flow curtain is one key component in the liberation function of the Librixer system. Each vortex is influenced by the lower pressure in the processing chamber below. As the particles are getting liberated and less dense or smaller, they eventually are sucked down into the next chamber where the processing is repeated in a similar fashion until the very last chamber.

Herein, particle sizes are referred to using relative terms, such as small, medium, and large. It is appreciated that absolute size values can be determined by straight forward experimentation. In the present disclosure, relative sizes are deemed more appropriate in order to not obscure the general inventive concept.

Since the Librixer comminutor liberate and micronize a source material along natural boundaries, the resulting particles will consist predominantly of a single component, possibly with smaller amounts of other components. As an example, if the Librixer comminutor is used to process slag from a mineral extraction process, comprising a mix of different minerals, each resulting particle will consist predominantly of a single mineral. Subsequent processing in the cyclonic particle separator can then be used to separate and sort particles comprising predominantly of different minerals into different outlet streams, thus separating e.g., char, silica oxides, iron oxides and aluminum oxides. Another example, not part of the invention, could be in a recycling process treating a mix of e.g., paper, plastic, and metal, where particles comprising mostly either paper, plastic, or metal could be sorted into different outlet streams.

The Librixer comminutor 310 has several operating parameters, comprising rotation direction (clockwise or counterclockwise), rotation speed of the rotor disc 384, and feed rate of the source material into the comminution reactor 310 expressed in volume per hour. These operating parameters may be adjusted in dependence of the source material to be processed, e.g., through experimentation.

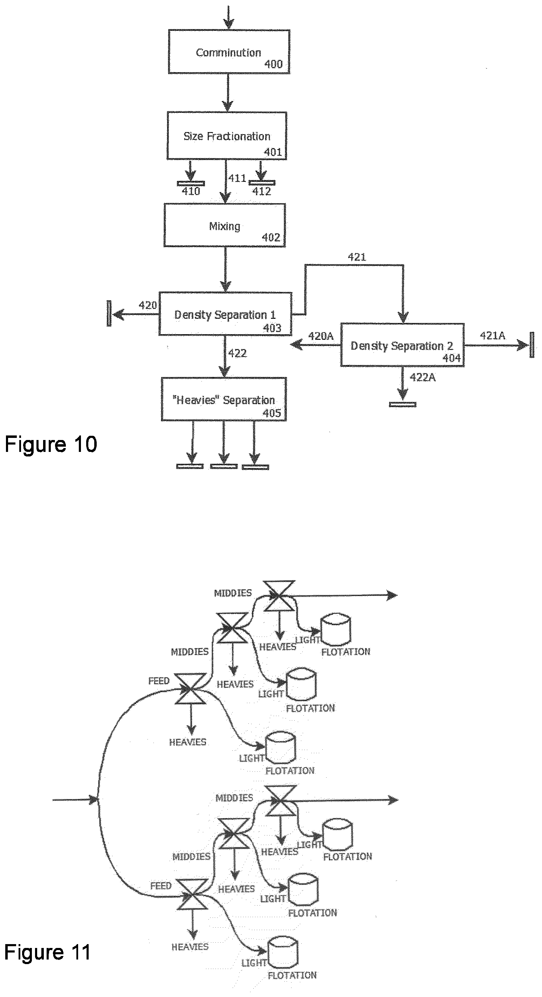

There is also herein disclosed a method, shown in the flowchart in Figure 10, for processing a fluid comprising solid particles using a cyclonic particle separator, where the cyclonic particle separator comprises a rotor 220, at least one electromagnetic coil 217 and/or at least one ultrasound generator, and a main chamber 210. The main chamber 210 comprises at least one section of non-conducting material. The method comprises, after comminution 400 and size fractionation 401 into two or more size fractions 410, 411, 412 or as many as needed. Thereafter, if suitable, mixing the fractionated solids with a fluid 402 and feeding the fluid into the cyclonic particle separator, inducing a rotation of the fluid in the chamber by the rotor 220, and generating, by the electromagnetic coil 217 and/or ultrasound generator 216, a pulsed magnetic field and/or an ultrasound pulse in the particle separator in connection to the at least one section of non-conducting material. The pulsed magnetic field and/or ultrasound is arranged to vibrate the solid particles, thereby liberating the solid particles from each other.

As previously described, feeding the fluid into the cyclonic particle separator may be accomplished through a feeding means such as a pump. Such feeding means are known in the art.

The method may also comprise separating the fluid into at least a first and second output stream, the first output stream being extracted at a first outlet 212 and the second output stream being extracted at a second outlet 214, the first and second outlet being arranged in different positions on the particle separator, wherein the solid particles in the first and second output stream have different average weights.

The method according to any previous claim, where the method comprises separating the fluid into three output streams extracted at a first (213), second (214) and third (212) outlet, the first (213), second (214) and third (212) outlets being arranged in different positions on the particle separator, wherein the solid particles in each output stream have different density 420, 421, 422.

Furthermore, the method may also comprise further sorting any one or all 420, 421, 422 of the solid particles of at least one outlet stream by means of methods such as magnetic separation, spiral separation, filtering, or electrostatic separation, or by feeding the at least one outlet stream into a second cyclonic particle separator 404.

Depending on the contents of an output stream, the fluid in the outlet stream may undergo further treatment. As an example, an output stream may be put through a spiral separator to further separate particles with different specific weights, or magnetic particles may be extracted using a magnetic separator. Other methods such as filtering may also be applied. Such sorting methods are known. As another example, an output stream could be fed into a second cyclonic particle separator. The second cyclonic particle separator may be configured similarly or differently to the first and may be used to further separate and sort the particles of the output stream by density. For instance, one output stream of the first cyclonic particle separator may comprise mainly two types of particles of slightly different composition and slightly different density, that could not be efficiently separated in the first cyclonic particle separator due to the presence of significantly lighter or heavier particles. A second cyclonic particle separator could then be arranged to separate the two types of particles by their density in the absence of the lighter or heavier particles that were removed by the first cyclonic particle separator 403.

Optionally, a plurality of cyclonic particle separators could be used in sequence as illustrated in figure 11.

The method may also comprise, prior to feeding the fluid into the first or only cyclonic particle separator, generating the solid particles comprised in the fluid by comminuting a source material in a comminutor as a slurry.

The method may also comprise sorting the solid particles according to a size of the solid particles and selecting solid particles in a predetermined size range for sorting in the cyclonic particle separator.

During processing in the cyclonic particle separator, one significant factor in determining which outlet stream a particle ends up in is the density of the particle. If the particles fed into the cyclonic particle separator are of approximately the same size, the weight differences between the particles will be primarily due to differences in density or specific weight, which in turn are dependent on differences in the component materials comprised in the particle. As an example, a particle comprising mostly iron oxide is going to be heavier than a particle of the same volume comprising mostly silica oxide. Sorting the solid particles according to size and selecting particles in a predetermined size range for processing thus makes it more efficient to sort the particles according to density, and thereby according to component materials, in the cyclonic particle separator.

Sorting of particles according to size may for example be done by methods such as sieving or different forms of mechanical screening. These methods are known in the art.

As an example, the comminuted particles could be sorted into size ranges comprising particles with a diameter smaller than 50 microns, particles with a diameter between 50 and 75 microns, and particles larger than 75 microns. The particles in each size range could then be processed separately, e.g., by using one cyclonic particle separator to sort particles in each size range.

The method may also comprise that the comminutor 310 comprises a spinnable shaft 381 and two or more processing chambers 382, separated by segmented plates 383. Each processing chamber 382 comprises a rotor disc 384 attached to the shaft 381 and one or more vortex generators 385 placed in a side wall 386 apex corner of the processing chambers 382. The source material is fed into the comminutor 310, and particles are liberated from the source material by means of a chaotic vortex flow of the source material and the liberated particles generated in the processing chambers 382.

According to aspects the fluid may comprise a liquid, and solid particles suspended in the liquid, forming a slurry. As an example, the liquid may be water. As another example, the liquid may be an oil. The liquid could also be solvent such as ethanol. The slurry could, as an example, consist of 65 to 95 % liquid and 5 to 35 % particles by volume, although other compositions are possible. Suitable slurry compositions may be found through routine experimentation. According to other aspects, the fluid may comprise a gas and solid particles suspended in the gas. According to one example, the gas may be air. According to another example, the gas may be an inert gas. Generally, the purpose of the fluid is to carry the solid particles through the cyclonic particle separator. As such, it may be necessary to choose the fluid to ensure that the heavier particles have sufficient buoyancy in the fluid to be carried along. The buoyancy depends on the difference in weight between the particle and an amount of fluid of the same volume. Using a liquid may thus be advantageous for heavier particles consisting e.g., of metal oxides, while a gas may be sufficient for the lighter particles consisting e.g., of plastic or char according to the invention.

The method may also comprise, prior to feeding 402 the slurry into the cyclonic particle separator, mixing the solid particles with liquid to form the slurry. Methods and devices for mixing solid particles and a liquid to form a slurry are known in the art.

According to aspects, the solid particles may comprise waste material from a process in which minerals are extracted from an ore. If the extraction method relies on smelting this waste material can take the form of dross, i.e., lighter impurities floating on top of the molten ore or suspended within it, or slag, which is generally a glasslike substance comprising silica and metal oxides. If the process in which minerals are extracted from an ore is hard rock mining, the waste material could be tailings. The solid particles may also comprise waste material from coal mining processes, such as coal fines.

According to other aspects, the solid particles may comprise recycled materials, for example recycled packaging made from metal, paper, and plastic. According to yet other aspects, the solid particles may comprise food products.

The method, or parts of the method, may be executed by one or more control units arranged to control the cyclonic particle separator, the comminution reactor 310, or any mixing apparatus 402 or apparatus 402 for feeding a fluid into a container comprised in the system.

Optionally, the system may also comprise a mixing apparatus 402 for mixing the comminuted particles with a fluid such as a liquid or a gas prior to processing in the cyclonic particle separator. The system may further comprise an apparatus 402 for feeding the fluid comprising the solid particles into the cyclonic particle separator.

As described above, one embodiment of the present disclosure provides a method for processing a fluid comprising solid particles. Specifically, the method is performed using a comminutor and cyclonic particle separator as described herein. For example: the cyclonic particle separator comprises a rotor, at least one electromagnetic coil and/or at least one ultra-sound generator, and a main chamber, where the main chamber comprises one or more sections of non-conducting material; and the comminutor comprises a rotor, a plurality of segmented plates, and a plurality of vortex generators.

The method comprises: generating the solid particles comprised in the fluid by comminuting a source material in a comminutor; feeding the fluid into the cyclonic particle separator; inducing a rotation of the fluid in the cyclonic particle separator chamber by the rotor; and vibrating the solid particles by either (a) using the electromagnetic coil to generate a pulsed magnetic field, and/or (b) using the ultra-sound generator to generate a pulse in the particle separator in connection to the one or more sections of non-conducting material, thereby liberating the solid particles from each other.

Preferably, the liberated solid particles comprise liberated products. For example, the method further comprises outputting, or otherwise extracting, one or more liberated products. Therefore, the method for processing a fluid comprising solid particles comprises a method for generating, liberating, or extracting liberated products from a source material. The skilled person will understand that the fluid optionally comprises air, such that a fluid comprising solid particles is one or more solid or liquid materials in air, and hence the source material is optionally the one or more solid materials.

For example, the method is suitable for any of the following:
the source material comprises vegetable matter and the liberated product comprises starch and/or protein;
the source material comprises clothes, clothing, fabric, or clothing fabric and the liberated product comprises cotton, plastic(s), and/or metal(s); or
the source material is associated with wind turbine blades, e.g. the source material comprises a section of a wind turbine blade, and the liberated product comprises epoxy and/or glass fiber.

Further non-limiting examples of source materials include any of:
Food stuffs or organic matter, e.g. Alfalfa, Algae, barley, beans, Blueberry, Broccoli, BSG, Buckwheat, Cahoun Nut, Carob, Cheese, Chia, Chickpeas, Cinnamon, Cocoa, Cocoa (press cake), Coffee, Coffee beans, Cohune, Corn, Corn (protein), Corn leaf (seroctin), Cranberry, Date Culls, DDGS, Echinacea, Field beans, Flax, Flax Seed, Ginseng, Grape, Grapes (seeds, skin), Hemp, Hemp Seeds, Hemp Stalk, Kava Kava, Larch Tree (chips), Lentils, Lupins, Malt (grains), Mesquite, Mushrooms, Nutmeg, Oats, OSG, Palmetto, Peanuts (dry roasted, raw, skins), Peas, Pepper corns, Quinoa, Rapeseed, Red Beans, Rice (whole brown, protein, white, Rice Hull (ash), Rye, Saw Palmetto, Sesame, Soy Beans (whole, protein powder), St. John Wort, Straw, Sugar, Sugar Cane, Sunflower, Tea (black, green), Walnut shells, Walnuts, Wheat, Wheat (whole), celecoxib (Celebrex), Creatine, Lesstanol or Policosanol, Loxoprofen sodium, HGH complete, or Phystosterol;
Minerals or materials, e.g. Alunite, Arizona Black Sand, Copper ore, Copper slag, Gypsum, Mica, Oil Shale, Talc, Trona, or Various crude ores;
Chemical materials or compounds, e.g. Ammonium Bicarbonate, Ammonia Sulfate, Calcium Citrate, Cement (clinker), Char, Graphite (carbon), Magnesium Citrate, Melamine Cyanurate, MonoAmmoniumPhosphate, Needle Coke, Polyacrylamide, Potassium Persulfate, Sodium Benzoate, Sodium Bicarbonate, Sodium Chloride, Sodium Triphosphate, or Titanium Dioxide;
Recyclable materials, e.g. Aluminum Cans UBC, Aluminum Punch Outs, Aluminum Dross, Aluminum Siding (sized), Asphalt Shingles, Laminated Automotive Glass, Char or carbon (burned tires), Crtscreens, Hemp Fabric, High Grade Circuit Boards, Recycle Refrigerator Fractions, Glass Flakes, Hydraulic Hose, Injet Pellets, Lunar Dust simulant, Polyetherether Ketone (PEEK), PVC Plastic, Polycarbonate, Poly Rope, Polyethermide, Rubber Tread, Rubber Tires (radial), Titanium Dioxide, Wollastanite, or Vestowax; and/or
Other material comprising desired solid particles for liberation, e.g. Amino Acid cake, Antler (deer), Crab Shells, Diatoms, Mussels (dry), Pink Salmon Fish Waste, or Shark Cartilage.
The above materials listed are examples and the methods, systems, and hence apparatus described herein are not limited to any of the above.

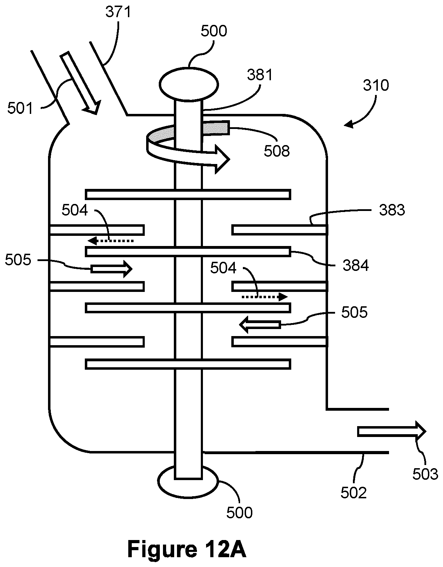

According to an additional or alternative embodiment, the comminutor comprised in any of the systems or methods described above may be a comminutor as described in relation to Figures 12A-C.

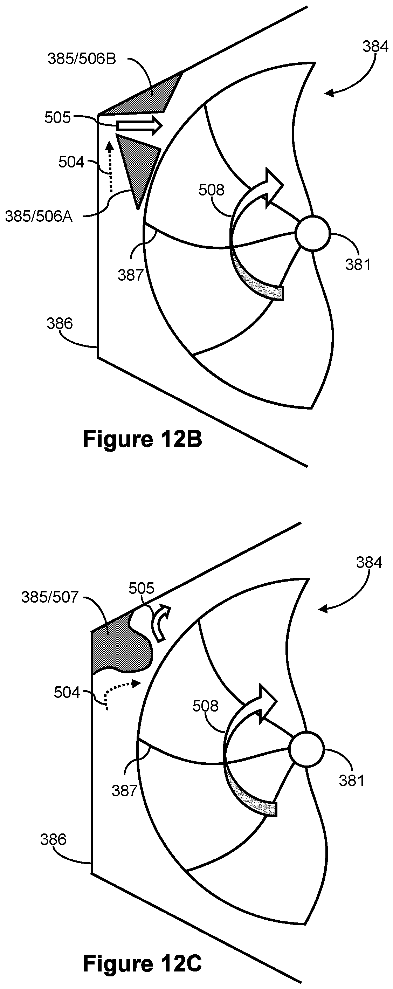

Figures 12A-C illustrate system architecture diagrams for the comminutor 310 and rotor(s) 384. Specifically, Figure 12A shows comminutor 310 according to embodiments disclosed herein and Figures 12B-12C show rotors 384 within comminutor 310 according to embodiments disclosed herein. The disclosure of Figures 12A-C are optionally applied to any of the above disclosure in relation to Figure 9 or where reference is otherwise made to comminutor 310.

Figures 12A-12C comprise comminutor 310, which further comprises a spinnable shaft 381 and two or more processing chambers 382 (not labelled here), separated by segmented plates 383. Each processing chamber 382 comprises a rotor disc 384 attached to the shaft 381 and one or more vortex generators 385 placed in a side wall 386 apex corner of the processing chambers 382. A vortex generator 385 comprises either first flow generator portions 506A and 506B or a second flow generator 507. The source material is fed into the comminution 310 via entrance opening 371, as shown by entry flow 501, and particles are liberated from the source material by means of a chaotic vortex flow of the source material. The liberated products are generated in the processing chambers 382, and the liberated products are extracted or otherwise output from comminutor 310 via exit opening 502, as shown by exit flow 503.

According to one embodiment, the comminutor 310 is an example of an improved Librixer comminutor. During operation, a mixture of source material and fluid, e.g. air or mixing fluid, enters an entrance opening 371 of the comminutor 310. In the first upper of two or more vertical processing chambers 382, the mixture is spun outwards and will create a circular source material curtain restrained by the polygon shaped walls. The source material curtain spins in either a clockwise or a counterclockwise direction initiated by the vertical rotor assembly consisting of as many rotors 384 as there are processing chambers 382.

One or more, or preferably all, processing chambers 382 are configured such that the rotor 384 is closer to the upper segmented plate 383, i.e. the segmented plate 383 above the rotor 384, and further from the lower segmented plate 383, i.e. the segmented plate 383 below the rotor 384, as shown in Figure 12A. Beneficially, positioning the rotor 384 closer to the upper segmented plate 383 results in a high pressure flow 504 above the rotor 384 and a low pressure flow 505 below the rotor 384, e.g. respective to average pressure within the comminutor 310. Therefore, the speed and flow of material through the comminutor 310 is increased, which not only decreases the time taken for materials to be liberated, but also increases the efficiency of liberation, and comminutor 310 is capable of liberating a wider and more diverse range of materials in comparison to a typical Librixer-based comminutor. For example, source material within comminutor 310 is in optimal dispersion for a cyclonic flow due to the above-described positioning of rotor 384 relative to upper and lower segmented plates 382, such that airflow is used to separate or otherwise liberate components or other solid particles of the source material.

Furthermore, a traditional Librixer-based comminutor, where the rotor 384 is placed approximately centrally between segmented plates 383, often generates turbulent flow between the rotor 384 and upper segmented plate 383, which slows down the material flow and decreases efficiency. Comminutor 310 as described herein does not generate such turbulent flows, and hence results in further increases to speed and efficiency over traditional Librixer-based comminutors.

The source material flow is preferably restrained by an odd number of flat wall segments of side wall 386, as shown in Figures 12B and 12C. In one or more apex corners, or preferably each apex corner, i.e. between two flat wall segments, a vortex generator 385 is placed setting up two small vortexes counter to the main flow. The main source material flow curtain interacts with these smaller vortexes consisting of a fluid, e.g. air, and source material in such way that brittle materials are stressed apart along natural boundaries. More flexible materials or fractions of a material, such as fibers, tend to go through relatively un-harmed.

According to one embodiment, the vortex generator 385 comprises first flow generator 506 (not labelled), comprising a first flow generator portion 506A and a first flow generator portion 506B, as shown in Figure 12B. First flow generator portions 506A and 506B are configured to operate together to manipulate how material flow interacts with the smaller vortexes. First flow generator portion 506A is configured to direct material flow towards the apex corner, resulting in a high pressure flow, e.g. increasing the material flow speed. First flow generator portion 506B is configured to direct material towards the rotor 384, resulting in a low pressure flow 505, e.g. decreasing the material flow speed. Beneficially, directing material flow using first flow generator 506 results in fewer blockages and improved flow. While other vortex generators 385 can result in blockages and creation of unwanted heat, first flow generator 506 prevents such inefficiencies and energy loss. Therefore, inclusion of first flow generator 506 both improves the efficiency of the liberation process (allowing comminutor 310 to be used for a wider range of materials and resulting in a higher concentration of desired liberated product) and decreases energy requirements of systems and methods utilizing comminutor 310.

Optionally, first flow generator portion 506A does not require first generator portion 506B, and/or first flow generator portion 506B does not require first generator portion 506A. For example, inclusion of either first flow generator portion 506A, first flow generator portion 506B, or both depends on the angle of the apex corner and/or the desired pressure or speed of material flow. The positioning, size, and shape of first flow generator portion 506A and/or first flow generator portion 506B is optionally tailored to the comminutor 310 and/or material input for optimal liberation.

According to another embodiment, the vortex generator 385 comprises second flow generator 507, as shown in Figure 12C. In comparison to first flow generator 506, which funnels material flow away and then towards the rotor 384, second flow generator 507 directs material flow by funneling towards and then away from the rotor 384. As with first flow generator 506, the direction of material flow results in a high pressure flow 504 followed by a low pressure flow 505, which results in optimization and efficiency gains over traditional Librixer-based comminutors as described above.

Optionally, comminutor 310 comprises both first flow generator 506 and second flow generator 507, e.g. a higher section of comminutor 310 comprises a plurality of first flow generators 506 and a lower section comprises a plurality of second flow generators 507. Beneficially, the combination of first flow generator 506 and second flow generator 507 results in more complex/tailored direction of material flow, where high pressure flow 504 or low pressure flow 505 is generated towards the rotor 384 at desired stages of the liberation process. Directing material flow in this manner helps fine-tune the comminutor 310 for specific material inputs, improving overall optimization and efficiency.

Applying comminutor 310 as described in relation to Figures 12A-C to above-described methods for generating liberated products from source materials results in multiple advantages. For example, when applied to food processing, comminutor 310 enables protein extraction from legumes and reduces food waste and environmental impacts by making the food production process more sustainable and efficient. In another example, when applied to mining processing, comminutor 310 enables enhanced dehydration, micronization, and purification of metals and minerals, making the mining process(es) more efficient and sustainable. In a further example, when applied to recycling, comminutor 310 makes glass, metal, plastic, and battery recycling more efficiency and reduces waste deposits.

Optionally, bearing 500 for controlling shaft 381, e.g. controlling rotation, condition and/or position, is outside comminutor 310 or otherwise separated from the source material and/or liberated products. Beneficially, positioning of bearing 500 increases accessibility, increases functionality, and simultaneously reduces wear and tear as exposure to the forces within comminutor 310 is reduced, further improving the efficiency of comminutor 310.

Optionally, the above-referenced methods do not utilize the cyclonic particle separator described herein, and instead use alternative suitable means for separating solid particles. For example, a method for extracting liberated products from a source material comprises: generating solid particles by comminuting a source material in a comminutor 310; vibrating the solid particles to liberate the solid particles from each other; and outputting a liberated product comprising one or more solid particles. Preferably, comminutor 310 comprises at least one rotor 384, an upper segmented plate 383 and a lower segmented plate 383, and a vortex generator 385. The rotor 384 is positioned closer to the upper segmented place 384 than the lower segmented plate 383, thereby generating a high pressure material flow 504 above the rotor and a low pressure material flow 505 below the rotor. Optionally, the vortex generator 385 comprises a first flow generator 506 configured to generate another high pressure material flow 504 away from the rotor 384 and another low pressure material flow 505 towards the rotor 384.

For example, when a source material input to comminutor 310 is vegetables, the comminutor 310 can be tailored to liberate starch and protein at an optimal efficiency e.g. without destroying the protein. Such tailoring is based on the number of rotors 384, the distance between each rotor 384 and the upper/low segmented plates 383, and the selection of first flow generators 506 and second flow generators 507 throughout the comminutor 310. In this example, there are at least four rotors 384; the distance between the second/third rotor 384 and the upper segmented plate 383 is less than the distance between the second/third rotor 384 and the lower segmented plate 383; and the vortex generators 385 associated with the first and second rotor 384 comprise first flow generators 506.

In summary, comminutor 310 helps to recycle and reuse materials, and makes associated and alternative manufacturing processes that utilize comminutor 310 more efficient.

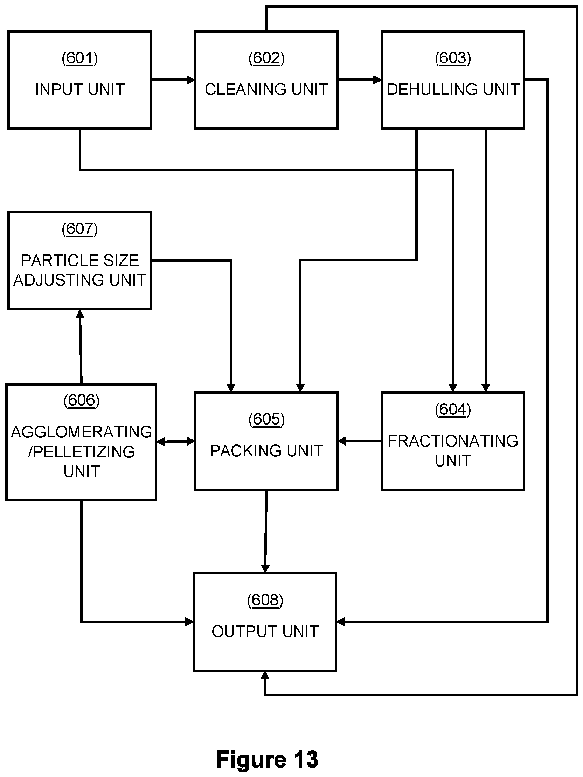

Figure 13 illustrates a system architecture diagrams for a liberation system 600 (not labelled). Specifically, Figure 13 shows liberation system 600 comprised of a plurality of functional units 601-608, which comprise any required components to perform the functionality described below in relation to each unit.

The skilled person will understand that each functional unit optionally shares none, any, or all components with other functional units, and any of the functional units may be omitted or duplicated within the liberation system 600. The skilled person will further understand that the liberation system 600 is not limited to organic matter or protein extraction, and may be applied to any of the methods described above and comprise any of the components described above, e.g. in relation to any of Figures 1-12C.

According to one embodiment, liberation system 600 is directed towards food waste recycling and/or protein extraction, and liberation system 600 comprises: input unit 601; cleaning unit 602; dehulling unit 603; fractionating unit 604; packing unit 605; agglomerating/pelletizing unit 606; particle size adjusting unit 607; and output unit 608.

Input unit 601 is configured to receive raw material input, such as waste food, and optionally store and/or categorize the raw material input. For example, input unit 601 comprises one or more storage containers, such as silos, and components for transporting received raw material into the one or more storage containers, such as motorized belts or equipment.

Raw material is then obtained at cleaning unit 602 from input unit 601. Cleaning unit 602 is configured to perform any of the following: controls or otherwise measures throughput; separates impurities and/or light materials; destones; sorts raw material e.g. using standard optical sorting or other forms of electromagnetic sensors; removes dust; and/or collects impurities or waste. Optionally, cleaned material or waste material is transferred to packing unit 605 or output unit 608.

Cleaned material is then obtained at dehulling unit 603 from cleaning unit 602. Dehulling unit 603 is configured to perform any of the following: controls or otherwise measures throughput; separates hulls; filters fiber from hulls; separates and/or sorts fiber e.g. based on size or quality; and/or transfers fiber e.g. based on size or quality. Optionally, sorted fibers are transferred to storage, packing unit 605, or output unit 608.

Fractioning unit 604 obtains raw material from input unit 601, e.g. directly receives raw material, or de-hulled material from dehulling unit 603. Fractioning unit 604 transforms obtained material into one or more fractions, such as a fiber fraction, a starch-rich fraction, and/or a protein rich fraction. Fractioning unit 604 is configured to perform any of the following: if receiving raw material that requires cleaning or de-hulling, transferring raw material to the cleaning unit 602 or dehulling unit 603, respectively; buffer obtained material with feeder material, where the feeder material optionally comprises raw material, cleaned material, de-hulled material, or other material such as a feeder liquid, air or water; grind material, e.g. to a fine particulate; filter material, e.g. filter the fine particulate; and/or transfer material, e.g. transfer starch-rich material to a first storage and/or protein-rich material to a second storage. For example, fractioning unit 604 comprises comminutor 310 of Figures 12A-C. Optionally, the filtered material is output to packing unit 605 or the output unit 608.

Packing unit 605 obtains material from any of dehulling unit 603, fractioning unit 604, agglomerating/pelletizing unit 606, or particle size adjusting unit 607, and outputs packaged material to output unit 608 or stored material to agglomerating/pelletizing unit 606. Packing unit 605 is further configured to perform any of the following: storing, packing, or milling fibers e.g. obtained from dehulling unit 603; filtering obtained material; packing fiber fraction; and/or storing starch-rich fraction.

Optionally, packing unit 605 is further configured to perform any of the following: packing and/or storing starch-rich material obtained from fractioning unit 604; packing and/or storing protein-rich material obtained from fractioning unit 604; and/or transferring protein-rich material obtained from fractioning unit 604 to agglomerating/pelletizing unit 606.

The agglomerating/pelletizing unit 606 obtains protein-rich material from packing unit 605. The agglomerating/pelletizing unit 606 is configured to perform any of the following: agglomerate obtained material; dry obtained or agglomerated material; sieve material for dust removal and subsequently transfer agglomerated material, i.e. pellets, to storage, e.g. to packing unit 605, and optionally transfer dust for further agglomeration; and/or store or package agglomerated material. Optionally, agglomerating/pelletizing unit 606 comprises a dust removal cyclone and/or a dust removal filter, where dust is material that has not been optimally agglomerated.

Particle size adjusting unit 607 is optional and is configured to work alongside agglomerating/pelletizing unit 606. For example, during the sieving process, removed dust or sub-optimally agglomerated material is transferred from agglomerating/pelletizing unit 606 to particle size adjusting unit 607. Particle size adjusting unit 607 is configured to optimize pellet size by increasing or decreasing agglomeration as required.

Output unit 608 is configured to store or otherwise output and/or transfer material, such as waste material from cleaning unit 602, agglomerated material from agglomerating/pelletizing unit 606, or other packaged/stored material from packing unit 605. Optionally, output unit 608 is further configured to monitor obtained material, such as measuring throughput, material composition and/or quality, or amounts e.g. relative to storage capacity of system 600. Further optionally, output unit 608 is configured to transfer material back to units of system 600 as required, such as to fractioning unit 604 as feed material, e.g. to control throughput or quality.

According to another embodiment of system 600, liberation system 600 comprises: input unit 601, fractionating unit 604, and output unit 608. For example, fractionating unit 604 comprises comminutor 310 of Figures 12A-C. Optionally, liberation system 600 is used for any of the purposes, processes, or methods described herein, including food recycling, waste recycling, fuel recycling, repurposing of materials, mining, extraction, or other processes where obtaining components from materials is required.

For example, liberation system 600 is directed towards recycling of wind turbine blades. One or more wind turbine blades, or other materials comprising glass fibers, are input to input unit 601 and glass fiber is output from output unit 608. Specifically, wind turbine blades are input to fractionating unit 604 from input unit 601, which liberates glass fiber from the composite wind turbine blade and transfers the glass fiber to output unit 608.

Preferably, fractionating unit 604 comprises comminutor 310 of Figures 12A-C and/or one or more cyclones, e.g. cyclonic particle separator 200, configured to optimize glass fiber extraction. For example, the one or more cyclones are configured to isolate glass fiber, filter glass fiber, or otherwise process the material comprising glass fiber, into one or more outputs. Example outputs include waste, glass fiber of a first size or first size range, glass fiber of a second size or second size range, and/or glass fiber of a selected quality. Quality is determined based on a quality value associated with size, composition, or other targeted feature.

Optionally, liberation system 600 further comprises packing unit 605, where the one or more outputs are packaged for otherwise stored for output at output unit 608.

## Claims

1. A sorting system (8) for separating autoclaved waste (7) into a plurality of fractions comprising different calorific value, wherein combining fractions keeps a substantially stable calorific value of an input to a thermolysis and pyrolysis reactor (40), the sorting system (8) comprising:
a set of conveyors for transporting waste;
a set of sorting devices for separating obtained waste from the set of conveyors into recyclable materials and non-recyclable waste (10), the set of sorting devices configured to:
separate ferrous metals from obtained waste using a magnetic separator (100) into an iron fraction (101);
separate obtained waste based on size and density using one or more screens and separators (102, 104, 106, 108, 110, 111, 112, 113, 114, 115) into a large high calorific value fraction (103), a flock/fibre fraction (107), a light materials fraction (109), a ferrous fraction (117) and a non-ferrous fraction (123); and
separate nylon and PCV from plastic from the large high calorific value fraction (103) and the light materials fraction (109) using computer operated wind sifting in combination with near infrared detection (116) into a PVC fraction (118) and a nylon fraction (119);
thereby separating recyclable materials comprising iron fraction (101), ferrous fraction (117), non-ferrous fraction (123), PVC fraction (118), and nylon fraction (119) from non-recyclable waste (10).

2. The sorting system of claim 1, wherein the one or more screens and separators comprises a first screen (102) configured to separate larger items into the large high calorific value fraction (103) and smaller items for further separation.

3. The sorting system of claim 2, wherein the one or more screens and separators comprises a second screen (104) configured to further separate the smaller items into items larger than 12 mm and items smaller than 12 mm.

4. The sorting system of claim 3, wherein the one or more screens and separators further comprises a magnetic drum over belt separator (106) configured to separate ion containing waste and a non-ferrous separator (105) configured to separate based on density, such that the items smaller than 12 mm are separated into the flock/fibre fraction (107) and non-ferrous fraction (123).

5. The sorting system of claim 3 or 4, wherein the one or more screens and separators further comprises a first wind sifting separator (108) configured to separate the items larger than 12 mm into less dense materials and more dense materials using blowing air and gravity, wherein the less dense materials are collected into light materials fraction (109).

6. The sorting system of claim 5, wherein the one or more screens and separators further comprises a screening unit (110) configured to separate dense materials from the wind sifting separator (108) according to size, and wherein smaller material is introduced to a magnetic drum over belt separator (111) to separate the ferrous fraction (117) and the non-ferrous fraction (123).

7. The sorting system of any preceding claim, wherein using near infrared detection (116) comprises using a plurality of infrared separators configured for separation of different types of plastic materials.

8. The sorting system of claim 7, wherein the plurality of infrared separators is configured to separate introduced material into fractions comprising PVC (118), nylon (119), PET (120), mixed plastics (121), and a high calorific end product fraction (122).

9. The sorting system of any preceding claim, wherein the non-recyclable waste (10) is introduced into a humidity adjustment unit (11) for input to the thermolysis and pyrolysis reactor (40).

10. The sorting system of any preceding claim, wherein the PVC fraction (118) is used internally for fuel gas generation, provided that the PVC amounts to less than about 1% by weight of the input to the thermolysis and pyrolysis reactor (40).

11. A method for separating autoclaved waste (7) into separating recyclable materials comprising an iron fraction (101), ferrous fraction (117), non-ferrous fraction (123), PVC fraction (118), and nylon fraction (119) from non-recyclable waste (10) using the sorting system (8) of any of claims 1-10, the method comprising:
obtaining and transporting the autoclaved waste (7) to the set of sorting devices using the set of conveyors;
separating ferrous metals from the autoclaved waste using the magnetic separator (100) into an iron fraction (101);
separating the autoclaved waste based on size and density using one or more screens and separators (102, 104, 106, 108, 110, 111, 112, 113) into a large high calorific value fraction (103), a flock/fibre fraction (107), and a light materials fraction (109);
separating remaining waste using one or more magnetic drum over belt separators (106, 111, 114, 115) into a ferrous fraction (117) and a non-ferrous fraction (123); and
separating nylon and PVC from plastic (103, 109) using computer operated wind sifting in combination with near infrared detection (116) of the set of sorting devices into a PVC fraction (118) and a nylon fraction (119).

12. The method of claim 11, further comprising combining fractions for keeping a substantially stable calorific value of the input to the thermolysis and pyrolysis reactor (40).

13. The method of claim 11 or 12, further comprising introducing the non-recyclable material (10) into a humidity adjustment unit (11) for adjusting humidity of the non-recyclable material (10) between 10 % to 25 % by weight.

14. The method of claim 13, wherein adjusting humidity comprises drying the non-recyclable material (10) or, if the non-recyclable material (10) is too dry, adding water or steam for humidifying the non-recyclable material (10).

15. The method of any of claims 11-14, wherein obtaining the autoclaved waste (7) comprises using one or more autoclaves to autoclave municipal solid waste.
